# EUROPÄISCHE PATENTSCHRIFT

(11) **EP 0 486 430 B1**
(45) Veröffentlichungstag und Bekanntmachung des Hinweises auf die Patenterteilung: **10.05.1995**
(21) Anmeldenummer: 91810868.9
(22) Anmeldetag: 11.11.1991
(51) Int. Cl.: G01V 8/00

(54) **Lichtschranke**
Light barrier
Barrière de lumière

(30) Priorität: 12.11.1990 CH 3584/90
(43) Veröffentlichungstag der Anmeldung: 20.05.1992
(73) Patentinhaber: Decoi, Beat, CH-7320 Sargans (CH)
(72) Erfinder: Decoi, Beat, CH-7320 Sargans (CH)
(74) Vertreter: Hasler, Erich, Dr.

(56) Entgegenhaltungen:
- EP-A- 0 039 424
- EP-A- 0 095 948
- EP-A- 0 236 755
- EP-A- 0 239 705
- EP-A- 0 310 932
- EP-A- 0 380 186

## Beschreibung

Die Erfindung bezieht sich auf ein Verfahren nach dem Oberbegriff des Anspruchs 1 und eine Lichtschranke nach dem Oberbegriff des Anspruchs 27 zur Durchfuehrung des Verfahrens.

Bei einer bekannten Lichtschranke [WO 82/02787 - OTIS] fuer einen Durchgang ist eine Anzahl von Strahlungs-Sendern an wenigstens einer Seite des Durchganges angeordnet und wenigstens ein Strahlungs-Empfaenger auf einer gegenueberliegenden Seite zu den Sendern positioniert, wobei der Empfaenger bei Auftreffen eines Lichtstrahles von einem der Sender ein Ausgangssignal erzeugt, wobei erste Mittel zur Aktivierung eines jeden Senders in einer ausgewaehlten Folge vorgesehen sind und die Vorrichtung zweite Mittel zur Erzeugung eines Detektionssignals bei Vorhandensein eines Objektes im Durchgang zwischen einem jeweiligen Sender und einem entsprechenden Empfaenger im Zusammenwirken mit den ersten Mitteln zur Aktivierung eines entsprechenden Senders und dem Ausbleiben eines Ausgangssignals von einem oder von mehreren der Empfaenger aufweist.

In einer anderen Version koennen die zweiten Mittel dazu eingerichtet sein, dass sie in einer ausgewaehlten Folge die Abwesenheit eines Ausgangssignals von jedem der beiden Empfaenger feststellen.

In noch einer anderen Version dieser Lichtschranke kann an jeder Seite des Durchganges ein erster Empfaenger im oberen Bereich und ein zweiter Empfaenger im unteren Bereich des Durchganges angeordnet sein, wobei zwischen diesen eine Anzahl von Sendern vorgesehen ist.

Im wesentlichen weist diese bekannte Lichtschranke ein Netzwerk von Lichtstrahlen auf, wobei diese nicht ausgerichtet und auf je einen zugeordneten Empfaenger justiert sind, sodass jeder Empfaenger eine Mehrzahl von Lichtstrahlen empfaengt, wodurch die zu ueberwachende Oeffnung mit den Lichtstrahlen ueberdeckt ist.

Bei einer bekannten Banknotenpruefmaschine [EP 00 95 848 - FUJITSU] werden ebenfalls Lichtstrahlen verwendet, um die Kanten der Banknote und damit im wesentlichen ihre Groesse festzustellen. Die Lichtsender und -empfaenger sind in einer Entfernung von ca. 20 mm einander gegenueber angeordnet und jeder Empfaenger kann neben dem direkten Lichtstrahl seines vis-a-vis angeordneten Senders auch noch die indirekten Lichtstrahlen der zu diesem Sender benachbarten Sender empfangen. Die Detektion erfolgt dadurch, dass die auf je einem Empfaenger auftreffende Energie ohne und mit eingeschobener Banknote miteinander verglichen wird. Es wird angegeben, nach welcher Formel die jeweiligen Seitenlaengen der Banknote ermittelt werden. Ein Auswahlkreis wählt jede der Lichtquellen und Fotosensoren aus, um einen Satz von Lichtquelle/Fotosensor-Paaren einzurichten. Dadurch wird vermieden, daß Störsignale anderer Lichtquellen Ungenauigkeiten verursachen. Das Ausgangssignal wird mit Bezugspegeln verglichen und der Lichtquellenstrom entsprechend geregelt.

Bei einem bekanntgewordenen Touchscreen [EP 02 39 705 - CARROLL] wird ein Lichtstrahlengitter mit entsprechenden Sendern und Empfaengern dazu verwendet, um die Position eines in dieses Lichtstrahlgitter eingebrachten Zeigers oder Fingers festzustellen, wobei die unterschiedliche Qualitaet der Leuchtdiodensender bezueglich Abstrahlrichtung und Abstrahlintensitaet durch einen nachgeschalteten programmierbaren Verstaerker versucht wird auszugleichen. Die zahlreichen Verstärkungswerte für die individuellen Fotodetektorpaare werden im Speicher eines Mikroprozessors abgelegt.

Eine solche Lichtschranke hat u.a. die Nachteile, dass sie bei einer Montage an bewegten Objekten, z.B. Tuerfluegeln, keine zuverlaessige Ueberwachung zulaesst, da die Intensitaetsverhaeltnisse der Abtaststrahlen auf die groesste Durchgangsoeffnung abgestimmt sein muessen und ausserdem die bei sich einander annaehernden Tueren sich aendernden wirksamen Abtast-Strahlenwege nicht beruecksichtigbar sind. Auch werden mit der Zeit auftretende Verschmutzungen der Sender und/oder Empfaenger nicht beruecksichtigt und koennen zu falschen Ausloesesignalen fuehren, damit aber Menschen, insbesondere aeltere und gebrechliche Menschen oder Bedienpersonen an Maschinen, gefaehrden.

Daher ist es eine Aufgabe der Erfindung, diese Nachteile zu beheben und eine auch sehr duenne Gegenstaende, z.B. Blindenstaebe etc., erfassende Lichtschranke zu schaffen, welche auch alterungsbedingte Aenderungen in den Sendern- und/oder Empfaengern ausgleicht. Auch soll es moeglich sein, eine Lichtschranke mit selbstsuchendem optimalem Abtaststrahl herzustellen, damit beim Einbau geringere Anforderungen an die Montagegenauigkeit und Justage gestellt werden muessen. Ebenso soll sich die Lichtschranke abschnittsweise oder permanent selbst ueberwachen und sich selbst kalibrieren.

Dies laesst sich erreichen mit den kennzeichnenden Merkmalen des Verfahrens nach Anspruch 1 und den kennzeichnenden Merkmalen der Vorrichtung nach Anspruch 27. Weitere Merkmale fuer vorzugsweise Varianten ergeben sich aus den abhaengige Anspruechen des Verfahrens und den abhaengigen Anspruechen der Vorrichtung.

Weitere Merkmale und die wesentlichsten Zusammenhaenge bei einer Lichtschranke ergeben sich aus der beispielsweisen Darstellung von Ausfuehrungsformen einer erfindungsgemaessen Lichtschranke anhand der Zeichnung. In dieser zeigt
- Fig. 1: die keulenfoermige Intensitaetsverteilung eines Senders oder Empfaengers,
- Fig. 2: die Reflexion eines Sekundaerstrahles an einer benachbarten Flaeche,
- Fig. 3: Prinzip einer Einweg-Lichtschranke mit 5 Arbeits-Abtaststrahlengaengen pro Sender,
- Fig. 4: einen Auswertekreis 1. Art mit Steuerung des Sendestroms der Sender,
- Fig. 5: einen Auswertekreis 2. Art mit Messung der Signalstaerke,
- Fig. 6: einen Auswertekreis 3. Art mit Regelung eines gesteuerten Verstaerkers,
- Fig. 7: einen Sendekreis 3. Art.

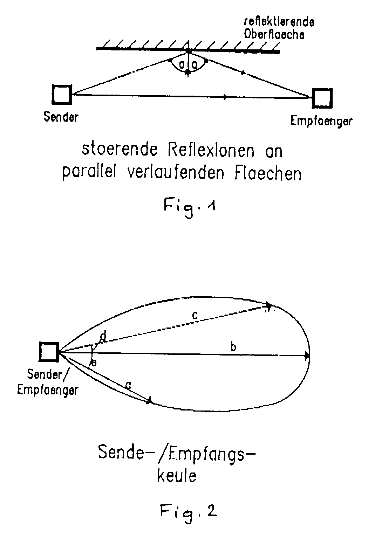

Zufolge der keulenfoermigen Intensitaetsverteilung eines normalerweise verwendeten Senders ohne Strahlbuendelung fuer Lichtschranken [Fig. 1] werden an nahe benachbart zur Lichtschranke angeordneten Objekten, beispielsweise sich schliessenden Schiebetueren etc., Reflexionen der Abtaststrahlen auftreten [Fig. 1], welche ebenfalls den Empfaenger treffen und dadurch ev. einen durch ein Objekt unterbrochenen Arbeits-Abtaststrahl umgehen koennen und somit keine Erkennung des Objektes liefern. Insbesondere, da in der Praxis die Empfindlichkeitswerte so eingestellt werden muessen, dass auch noch nach gealtertem Sender oder Empfaenger dieser noch ein Arbeits-Signal liefert. D.h., die Empfindlichkeitseinstellung ist in der Praxis fuer die Normalfaelle viel zu hoch. Gerichtete Lichtstrahlsysteme, beispielsweise Laserstrahlen, sind jedoch nicht immer einsetzbar.

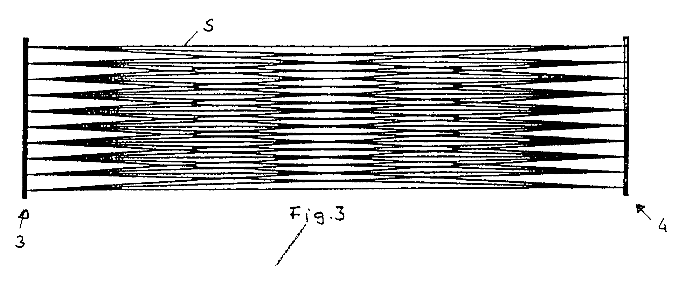

Eine Einweg-Lichtschranke enthaelt eine Anzahl in einer Reihe angeordneter Sender 3, von welchen jeder 5 Arbeits-Abtaststrahlengaenge S aufweist [Fig. 3], und eine gegenueber der Reihe der Sender 3 angeordnete Reihe von Empfaengern 4 . Sender 3 wie Empfaenger 4 sind mit einem kalibrierbaren Auswertekreis 1 verbunden, welcher bei Unterbrechung wenigstens eines Arbeits-Abtaststrahlenganges S ein Signal erzeugt und am Signalausgang As eines Steuerkreises 2 abgibt, welches an eine ueberwachte Einrichtung, beispielsweise einen Tuerantrieb, eine Sicherheitsvorrichtung bei einer Maschine etc.. gelegt und damit diese betaetigt werden kann.

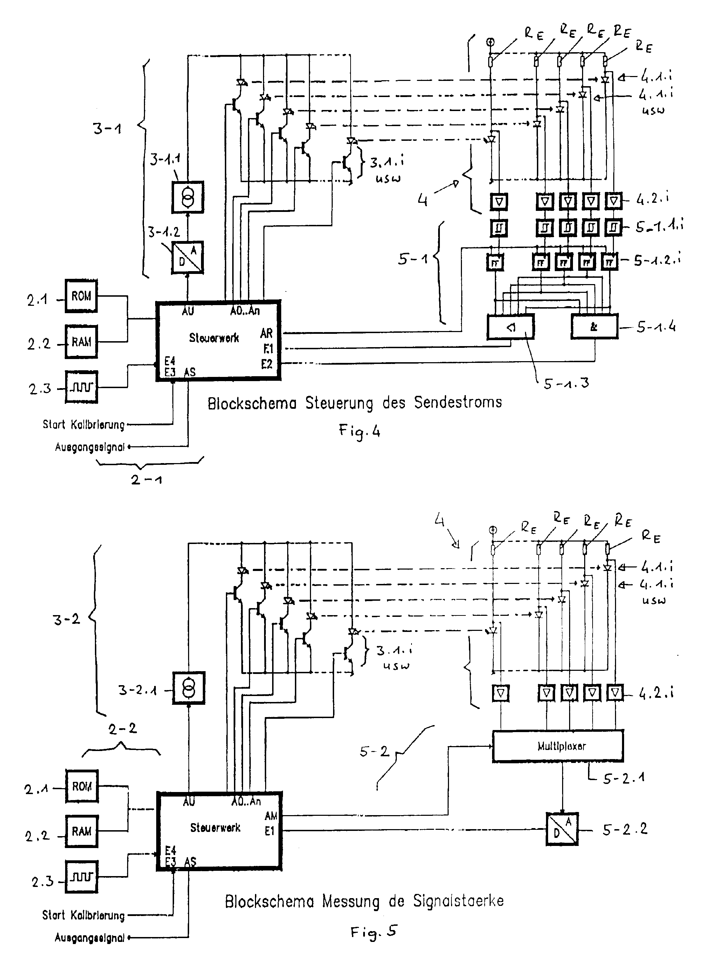

Ein kalibrierbarer Auswertekreis 1-1 [Fig. 4] in 1. Variante fuer eine Lichtschranke weist einen Steuerkreis 2-1 1. Art mit einem Arbeitsspeicher 2.2 und einem Lesespeicher 2.1, sowie eine Clock 2.3 auf. An diesen Steuerkreis 2-1 1. Art ist einerseits ein Senderkreis 3-1 1. Art an einem Ausgang Au sowie an Steuerausgaengen A0 ... An des Steuerkreises 2-1 und andererseits ein Kalibrierkreis 5-1 1. Art an einem primaeren Empfaengereingang E1 und an einem sekundaeren Empfaengereingang E2 sowie an einen Resetausgang AR angeschlossen, wobei am Kalibrierkreis 5-1 ein Empfaengerkreis 4 liegt. Dabei liegt der primaere Empfaengereingang E1 an einem ODER-Gatter 5-1.3 des Kalibrierkreises 5-1 und der sekundaere Empfaengereingang E2 an einem UND-Gatter 5-1.4 des Kalibrierkreises 5-1 .

Der hier verwendete Kalibrierkreis 5-1 1. Art zur Selbststeuerung der Intensitaet jedes Arbeits-Abtaststrahls S weist fuer jeden Empfaenger 4.1.i einen am Ausgang des dem Empfaenger 4.1.i zugeordneten Verstaerkers 4.2.i des Empfaengerkreises 4 liegenden Schwellwertschalter 5-1.1.i [Schmitt-Trigger] und ein von diesem angespeistes Flip-Flop 5-1.2.i auf, welches sowohl mit einem fuer alle Empfaenger 4.1.i gemeinsamen ODER-Gatter 5-1.3 als auch mit einem fuer alle Empfaenger 4.1.i gemeinsamen UND-Gatter 5-1.4 verbunden ist, wobei die Ausgaenge dieser beiden Gatter 5-1.3 bzw. 5-1.4 je an einem Eingang E1 bzw. E2 eines Steuerkreises 1. Art 2-1 liegen und dass alle Flip-Flops 5-1.2.i mit einem Reseteingang an einem Resetausgang AR des Steuerkreises 2-1 angeschlossen sind.

Der Steuerkreis 2-1 1. Art enthaelt Zuordnungsmittel, welche je einen Sender 3.1.i eines Senderkreises 3 und je einen Empfaenger 4.1.i eines Empfaengerkreises 4 temporaer je fuer eine Phase des Betriebes [z.B. je fuer eine Phase eines Abtastzyklus und einer entsprechenden Phase eines Kalibrierzyklus] einander zuordnen. Darueberhinaus weist der Steuerkreis 2-1 1. Art Mittel [nicht dargestellt] auf, welche feststellen, ob der primaere Empfaengereingang E1 den digitalen Wert 1 oder den Wert 0 aufweist. Liegt der Wert 1 am primaeren Empfaengereingang E1, dann sind alle Arbeits-Abtaststrahlen S vorhanden, d.h. es befindet sich kein Objekt im ueberwachten Raum und der Steuerkreis 2-1 gibt ein entsprechendes Signal an eine [nicht dargestellte] zu ueberwachende oder zu steuernde Einrichtung, z.B. eine Tuere, eine Foerderanlage, eine Werkzeugmaschine etc. via einen Steuer-Ausgang As ab. Liegt der Wert 0 am primaeren Empfaengereingang E1 des Steuerkreises 2-1 1. Art, dann ist wenigstens ein Arbeits-Abtaststrahlengang S unterbrochen, d.h. es befindet sich ein Objekt im ueberwachten Raum und der Steuerkreis 2-1 1. Art gibt ein entsprechendes Signal, meist ein Sperrsignal, an eine [nicht dargestellte] zu steuernde Einrichtung ab.

Ausserdem steuern die Zuordnungsmittel des Steuerkreises 2-1 1. Art die Zuordnung und die Reihenfolge der Zuordnung je eines Senders 3.1.i zu einem Empfaenger 4.1.i, wodurch je ein Arbeits-Abtaststrahlengang S gebildet wird.

Ein Senderkreis in einer 1. Art 3-1, wie er bei dieser 1. Variante einer Lichtschranke verwendet wird, weist eine Anzahl Sender 3.1.i auf, deren Eingaenge an eine gemeinsame, geregelte Stromquelle 3-1.1 angeschlossen sind, die mit ihrem Eingang an einem D/A-Wandler 3-1.2 liegt, dessen Eingang an einen Ausgang Au des Steuerkreises 2-1 oder 2-2 oder 2-3 angeschlossen ist und dass die Sender 3.1.i mit je ihnen zugeordneten Ausgaengen Ai des Steuerkreises 2-1 oder 2-2 oder 2-3 verbunden sind. Diese Ausgaenge Ai steuern die Sender an, um sie in den aktiven oder in den passiven Zustand ueberzufuehren. Dies in Uebereinstimmung mit den von den Zuordnungsmitteln gebildeten Arbeits-Abtaststrahlengaengen S durch Bildung je eines Sender-Empfaengerpaares.

Anstelle eines Senderkreises 1. Art 3-1 kann auch ein Senderkreis 2. Art 3-2 oder ein Senderkreis 3. Art 3-3, wie er weiter unten beschrieben ist, verwendet werden.

### WIRKUNGSWEISE

Wird bei einer 1. Variante einer Lichtschranke in einem Abtastfenster ein Arbeits-Abtaststrahlengang S als unterbrochen gemeldet, dann gibt der Steuerkreis 2-1 ein erstes externes Signal an eine an ihn angeschlossene und von ihm gesteuerte externe Vorrichtung, z.B. den Antrieb einer Sicherheitsvorrichtung, einer Transportleitvorrichtung, einer Messvorrichtung fuer den Durchhang laufender Bahnen, einer Tuere oder eines Fensters, von Klappweichen in Transporteinrichtungen odgl., ab, das beispielsweise das Verriegeln einer Sicherheitsvorrichtung an einer Maschine in geschlossenem Zustand oder einer Tuere in geoeffnetem oder geschlossenem Zustand bewirkt. Sobald alle Arbeits-Abtaststrahlengaenge S als nicht unterbrochen gemeldet werden, gibt der Steuerkreis 2-1 ein zweites externes Signal ab, welches je nach Art der angeschlossenen externen Vorrichtung diese steuert, beispielsweise den Antrieb zum Schliessen einer Tuere freigibt.

Wird anschliessend von der durch die Lichtschranke gesteuerten Einrichtung [in den Fig. nicht dargestellt] die Beendigung des ausgeloesten Vorganges durch ein Signal an den Steuerkreis 2-1 gemeldet, z.B. wenn die Tuere vollstaendig geschlossen ist, so wird in einer Untervariante, je nach Ansteuerung der Reihenfolge der Arbeits-Abtaststrahlengaenge S, beispielsweise das Abtastfenster geschlossen und der Kalibrierzyklus eingeleitet, indem alle Flip-Flops 5-1.2.i auf 0 gesetzt werden. Im Kalibrierzyklus werden fuer jede Sender-Empfaengerpaarung die charakteristischen Kenngroessen fuer den Betrieb der Lichtschranke, beispielsweise die Sendeleistung und/oder die Empfaengerempfindlichkeit bestimmt. Anschliessend an den Kalibriervorgang aller Sender-Empfaengerpaarungen wird automatisch auf ein Abtastfenster und den Abtastzyklus umgeschaltet und die zugehoerigen Flip-Flops 5-1.2.i ebenfalls wieder auf 0 gesetzt. Der Abtastzyklus wird jedoch erst zum Ablauf gebracht, wenn ein entsprechendes Signal der ueberwachten oder zu steuernden Vorrichtung eintrifft.

Dieser Kalibrierzyklus kann in diskreten Abstaenden oder kontinuierlich aufeinanderfolgend zwischen zwei Abtastfenstern ablaufen. Die Steuerung der Abfolge der Kalibriervorgaenge, d.h. einer Kalibrierreihenfolge, innerhalb eines Kalibrierzyklus kann auch so erfolgen, dass auch im Abtastfenster kalibriert wird, indem die nicht unterbrochenen Strahlen zur Kalibrierung freigegeben werden. Dies kann in Abweichung von einer oder mehrerer vorgebbarer Kalibrierreihenfolgen fuer die Arbeits-Abtaststrahlen erfolgen.

Fuer den Kalibrierzyklus wird der Sender 3.1.i auf einen konstanten und hohen Sendeleistungswert und der Empfangsverstaerker 4.2.i auf eine geringe Verstaerkung nahe Null eingestellt. Anschliessend wird der Verstaerkungsfaktor sukzessive erhoeht, bis der dem Verstaerker 4.2.i nachgeschaltete Schwellwertschalter 5-1.1.i ein Signal erhaelt, welches ueber dem Schwellwert liegt. Dieser minimale Verstaerkungsfaktor wird mit einem waehlbaren Faktor, z.B. 1,3 oder 1,5 etc. multipliziert, wodurch der Arbeits-Verstaerkungsfaktor erhalten wird. Dieser Wert wird beim Abtastzyklus zur Steuerung des Kalibrier-Verstaerkers 5-3.2 verwendet. Durch diese Erhoehung des Verstaerkungsfaktors auf den Arbeits-Verstaerkungsfaktor ist eine gewisse minimale Lichtreserve, d.h. nicht mehr als noetig, fur den sicheren und zuverlaessigen Betrieb der Lichtschranke vorhanden.

Ein kalibrierbarer Auswertekreis 1-2 [Fig. 5] in 2. Variante fuer eine Lichtschranke weist einen Steuerkreis 2-2 2. Art mit einem Arbeitsspeicher 2.2, einem Lesespeicher 2.1, sowie einer Clock 2.3 auf. An diesen Steuerkreis 2-2 2. Art ist einerseits ein Senderkreis 3-2 2. Art an einem Ausgang Au sowie an Steuerausgaengen A0 ... An des Steuerkreises 2-2 und andererseits ein Kalibrierkreis 5-2 2. Art an einem Empfaengereingang E1 sowie an einem Multiplexsteuerausgang Am angeschlossen, wobei am Kalibrierkreis 5-2 2. Art ein Empfaengerkreis 4 liegt.

Bei einem bei dieser 2. Variante einer Lichtschranke vorgesehenen Kalibrierkreis 2. Art 5-2 zur Messung der Signalstaerke des Empfaengers 4.1.i, ist jeder Empfaenger 4.1.i eines am Ausgang des dem Empfaenger 4.1.i zugeordneten Verstaerkers 4.2.i des Empfaengerkreises 4 mit einem Multiplexer 5-2.1 verbunden, welcher die Signale jedes der Verstaerker 4.2.i einzeln an einen gemeinsamen A/D-Wandler 5-2.2 schaltet, dessen Ausgang an einem Eingang E1 eines Steuerkreises 2. Art 2-2 liegt, welcher einen Multiplexer-Steuerausgang Am aufweist, der mit dem Multiplexer 5-2.1 zu dessen Ansteuerung verbunden ist.

Der Steuerkreis 2-2 2. Art enthaelt Zuordnungsmittel, welche je einen Sender 3.1.i eines Senderkreises 3 und je einen Empfaenger 4.1.i eines Empfaengerkreises 4 temporaer je fuer eine Phase eines Arbeitszyklus [z.B. je fuer eine Phase eines Abtastzyklus und einer entsprechenden Phase eines Kalibrierzyklus] einander zuordnen. Darueberhinaus weist der Steuerkreis 2-2 Mittel [nicht dargestellt] auf, welche feststellen, ob der Empfaengereingang E1 den digitalen Wert 1 oder den Wert 0 aufweist. Liegt der Wert 1 am Empfaengereingang E1, dann sind alle Arbeits-Abtaststrahlen S vorhanden, d.h. es befindet sich kein Objekt im ueberwachten Raum und der Steuerkreis 2-2 gibt ein entsprechendes Signal an eine [nicht dargestellte] zu steuernde Einrichtung, z.B. fuer eine Tuere, via einen Steuer-Ausgang As ab. Liegt der Wert 0 am primaeren Empfaengereingang E1 des Steuerkreises 2-2 2. Art, dann ist wenigstens ein Arbeits-Abtaststrahlengang S unterbrochen, d.h. es befindet sich ein Objekt im ueberwachten Raum und der Steuerkreis 2-2 2. Art gibt ein entsprechendes Signal, z.B. ein Sperrsignal, an eine [nicht dargestellte] zu steuernde Einrichtung ab.

Ausserdem steuern die Zuordnungsmittel des Steuerkreises 2-2 2. Art die Zuordnung und die Reihenfolge der Zuordnung je eines Senders 3.1.i zu einem Empfanger 4.1.i, wodurch je ein Arbeits-Abtaststrahlengang S gebildet wird.

Ein Senderkreis in einer 2. Art 3-2 weist eine Anzahl Sender 3.1.i auf, deren Eingaenge an eine gemeinsame, geregelte Stromquelle 3-2.1 angeschlossen sind, die mit ihrem Eingang an einem Ausgang Au des Steuerkreises 2-2 2. Art angeschlossen ist und dass die Sender 3.1.i mit je ihnen zugeordneten Ausgaengen Ai des Steuerkreises 2-2 2. Art verbunden sind.

Ueber diese Ausgaenge Ai werden die Sender 3.1.i vom Steuerkreis 2-2 angesteuert, um sie in den aktiven oder in den passiven Zustand ueberzufuehren. Dies in Uebereinstimmung mit den von den Zuordnungsmitteln gebildeten Arbeits-Abtaststrahlengaengen S durch Bildung je eines Sender-Empfaengerpaares.

Anstelle eines Senderkreises 3-2 2. Art kann auch ein Senderkreis 3-11. Art oder ein Senderkreis 3-3 3. Art, wie er weiter unten beschrieben ist, verwendet werden.

### WIRKUNGSWEISE

Wird bei einer 2. Variante einer Lichtschranke in einem Abtastfenster ein Arbeits-Abtaststrahlengang S als unterbrochen gemeldet, dann gibt der Steuerkreis 2-2 ein erstes externes Signal an eine an ihn angeschlossene und von ihm gesteuerte externe Einrichtung, z.B. den Antrieb einer Sicherheitsvorrichtung, einer Transportleitvorrichtung, einer Messvorrichtung, einer Tuere oder eines Fensters, von Klappweichen in Transporteinrichtungen odgl., ab, das beispielsweise das Verriegeln einer Sicherheitsvorrichtung an einer Maschine in geschlossenem Zustand, eines Hallentores oder einer Tuere in geoeffnetem oder geschlossenem Zustand bewirkt. Sobald alle Arbeits-Abtaststrahlengaenge S als nicht unterbrochen gemeldet werden, gibt der Steuerkreis 2-2 ein zweites externes Signal ab, welches je nach Art der angeschlossenen externen Einrichtung diese steuert, beispielsweise den Antrieb zum Schliessen oder Oeffnen eines Fensters freigibt.

Wird anschliessend von der durch die Lichtschranke gesteuerten Einrichtung [in den Fig. nicht dargestellt] die Beendigung des ausgeloesten Vorganges durch ein Signal an den Steuerkreis 2-2 [z.B. via Eingang E 3] gemeldet, z.B. wenn die Tuere vollstaendig geschlossen ist, so wird das Abtastfenster geschlossen und der Kalibrierzyklus eingeleitet. Dazu wird jeder Sender 3.1.i auf einen konstanten Leistungswert und jeder Empfangsverstaerker 4.2.i auf eine konstante Verstaerkung eingestellt. Der dem Empfangsverstaerker 4.2.i nachgeschaltete A/D-Wandler 5-2.2 misst die empfangene Signalstaerke und gibt sie dem Steuerkreis 2-2 weiter, welcher den ermittelten Wert mit einem Faktor kleiner 1, z.B. 0,666, multipliziert und das Ergebnis in einer Tabelle abspeichert. Dieser Vorgang wird fuer jede Sender-Empfaengerpaarung, also jeden Arbeits-Abtaststrahlengang S, wiederholt. Die so ermittelten und abgespeicherten Werte werden dann beim Abtastzyklus mit den zu derselben Sender-Empfaengerpaarung gehoerenden und aktuell ermittelten Signalstaerke verglichen. Ist der im Abtastzyklus ermittelte Wert kleiner als der in der Tabelle abgespeicherte Wert, wird ein Ausgangssignal erzeugt, welches in Zusammenwirken mit anderen Statuswerten der ueberwachten Einrichtung [in der Zeichnung nicht dargestellt] ein Signal, z.B. zur Oeffnung einer Tuere oder zur Verriegelung einer Sicherheitsvorrichtung, erzeugt. Anschliessend an den Kalibriervorgang aller Sender-Empfaengerpaarungen wird automatisch auf ein Abtastfenster und den Abtastzyklus umgeschaltet. Der Abtastzyklus wird jedoch erst zum Ablauf gebracht, wenn ein entsprechendes Signal der ueberwachten oder zu steuernden Einrichtung eintrifft. Es ist aber auch moeglich, den Kalibrierzyklus mit oder ohne Abstaenden weiterlaufen zu lassen, bis das Abtastfenster geoeffnet wird. Die Steuerung der Abfolge der Kalibriervorgaenge, d.h. einer Kalibrierreihenfolge, innerhalb eines Kalibrierzyklus kann auch so erfolgen, dass auch im Abtastfenster kalibriert wird.

Auch hier bewirkt die Modifikation des Kalibrierwertes mit einem Faktor eine gewisse minimale Lichtreserve fur den Betrieb der Lichtschranke, damit diese sicher und zuverlaessig arbeitet.

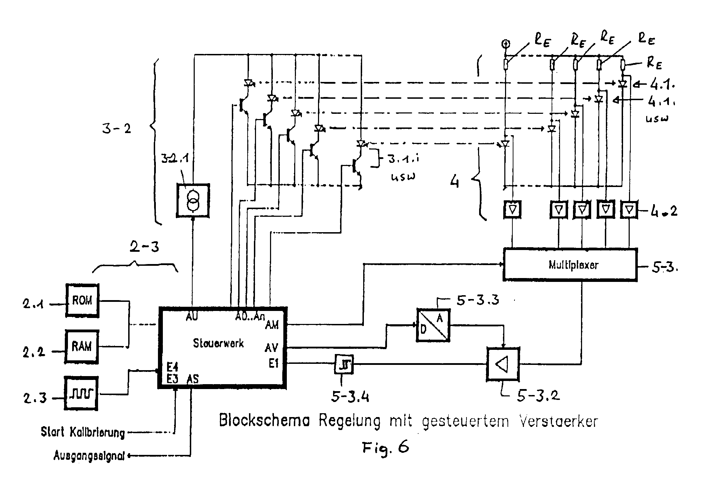

Ein kalibrierbarer Auswertekreis 1-3 [Fig. 6] in 3. Variante fuer eine Lichtschranke weist einen Steuerkreis 2-3 3. Art mit einem Arbeitsspeicher 2.2, einem Lesespeicher 2.1 und einer Clock 2.3 auf. An diesen Steuerkreis 2-3 3. Art ist einerseits ein Senderkreis 3-3 3. Art an einem Ausgang Au sowie an Steuerausgaengen A0 ... An des Steuerkreises 2-3 und andererseits ein Kalibrierkreis 5-3 3. Art an einem Empfaengereingang E1 sowie an einem Verstaerker-Steuerausgang Av angeschlossen, wobei am Kalibrierkreis 5-3 3. Art ein Empfaengerkreis 4 liegt.

Beim hier verwendeten Kalibrierkreis 3. Art 5-3 zur Selbststeuerung der Empfindlichkeit des Empfaengerkreises 4, ist jeder Empfaenger 4.1.i mit seinem ihm am Ausgang zugeordneten Verstaerker 4.2.i des Empfaengerkreises 4 mit einem Multiplexer 5-3.1 verbunden, welcher die Signale jedes der Verstaerker 4.2.i einzeln an einen gemeinsamen Kalibrierverstaerker 5-3.2 schaltet, dessen Ausgang an einem Eingang E1 eines Steuerkreises 3. Art 2-3 liegt, welcher einen Verstaerker-Steuerausgang Av aufweist, an dem ein Verstaerkersteuer-D/A-Wandler 5-3.3 liegt, der mit dem Kalibrierverstaerker 5-3.2 zu dessen Steuerung verbunden ist.

Der Steuerkreis 2-3 3. Art enthaelt Zuordnungsmittel, welche je einen Sender 3.1.i eines Senderkreises 3 und je einen Empfaenger 4.1.i eines Empfaengerkreises 4 temporaer je fuer eine Phase eines Arbeitszyklus [z.B. je fuer eine Phase eines Abtastzyklus und einer entsprechenden Phase eines Kalibrierzyklus] einander zuordnen. Darueberhinaus weist der Steuerkreis 2-3 3. Art Mittel [nicht dargestellt] auf, welche feststellen, ob der Empfaengereingang E1 den digitalen Wert 1 oder den Wert 0 aufweist. Liegt der Wert 1 am Empfaengereingang E1, dann sind alle Arbeits-Abtaststrahlen S vorhanden, d.h. es befindet sich kein Objekt im ueberwachten Raum und der Steuerkreis gibt ein entsprechendes Signal an eine [nicht dargestellte] zu steuernde Einrichtung, z.B. fuer eine Tuere, via einen nicht dargestellten Ausgang ab. Liegt der Wert 0 am Empfaengereingang E1 des Steuerkreises 2-3 , dann ist wenigstens ein Arbeits-Abtaststrahlengang unterbrochen, d.h. es befindet sich ein Objekt im ueberwachten Raum und der Steuerkreis ...2-3 3. Art gibt ein entsprechendes Signal, z.B. ein Sperrsignal, an eine [nicht dargestellte] zu steuernde Vorrichtung ab.

Ausserdem steuern die Zuordnungsmittel des Steuerkreises 2-3 3. Art die Zuordnung und die Reihenfolge der Zuordnung je eines Senders 3.1.i zu einem Empfanger 4.1.i, wodurch je ein Arbeits-Abtaststrahlengang S gebildet wird.

Bei dieser 3. Variante einer Lichtschranke ist ein Senderkreis in einer 2. Art 3-3 mit dem Steuerkreis 3. Art 2-3verbunden, der auch dieselbe Funktion aufweist.

Anstelle eines Senderkreises 2. Art 3-2 kann auch ein Senderkreis 1. Art 3-1 oder ein Senderkreis 3. Art 3-3, wie er nachfolgend beschrieben ist, verwendet werden.

### WIRKUNGSWEISE

Wird bei einer 3. Variante einer Lichtschranke in einem Abtastfenster ein Arbeits-Abtaststrahlengang als unterbrochen gemeldet. dann gibt der Steuerkreis 2-3 ein erstes externes Signal an eine an ihn angeschlossene und von ihm gesteuerte externe Einrichtung, z.B. den Antrieb einer Sicherheitsvorrichtung odgl., ab, das beispielsweise das Verriegeln einer Sicherheitsvorrichtung an einer Maschine in geschlossenem Zustand oder einer Tuere in geoeffnetem oder geschlossenem Zustand bewirkt. Sobald alle Arbeits-Abtaststrahlengaenge S als nicht unterbrochen gemeldet werden, gibt der Steuerkreis 2-3 ein zweites externes Signal ab, welches je nach Art der angeschlossenen externen Einrichtung diese steuert, beispielsweise den Antrieb zum Schliessen eines Fensters freigibt.

Wird anschliessend von der durch die Lichtschranke gesteuerten Einrichtung [in der Zeichnung nicht dargestellt] die Beendigung des ausgeloesten Vorganges durch ein Signal an den Steuerkreis 2-3 gemeldet, z.B. wenn die Tuere vollstaendig geschlossen ist, so wird das Abtastfenster geschlossen und der Kalibrierzyklus eingeleitet. Dazu wird der Sender auf einen konstanten Leistungswert und jeder Empfangsverstaerker auf eine konstante Verstaerkung eingestellt. Der dem Empfangsverstaerker nachgeschaltete regelbare Kalibrier-Verstaerker 5-3.2 gibt das empfangene Signal an einen Kalibrier-Schwellwertschalter 5-3.4, der bei genuegender Signalstaerke ein Ausgangssignal erzeugt, welches mit einem Faktor, z.B. mit 1,3 oder 1,5, multipliziert wird und das Ergebnis in einer Tabelle abspeichert. Dieser Vorgang wird fuer jede Sender-Empfaengerpaarung, also jeden Arbeits-Abtaststrahlengang S, wiederholt. Weist eine signifikante Zahl von Arbeits-Abtaststrahlengaengen S eine vom zulaessigen Arbeitsbereich innerhalb eines Toleranzbereiches liegende abweichende Signalstaerke auf, dann wird ueber den D/A-Wandler 5-3.3 der regelbare Verstaerker 5-3.2 nachgeregelt, bis sich wieder eine brauchbare Signalstaerke ergibt. Die so ermittelten und abgespeicherten Werte werden dann beim Abtastzyklus mit den zu derselben Sender-Empfaengerpaarung gehoerenden und aktuell ermittelten Signalstaerken verglichen. Ist der im Abtastzyklus ermittelte Wert kleiner als der in der Tabelle abgespeicherte Wert, wird ein Ausgangssignal erzeugt, welches im Zusammenwirken mit anderen Statuswerten der ueberwachten Einrichtung [in der Zeichnung nicht dargestellt] ein Signal, z.B. zur Oeffnung einer Tuere oder zur Verriegelung einer Sicherheitsvorrichtung, erzeugt. Anschliessend an den Kalibriervorgang aller Sender-Empfaengerpaarungen wird automatisch auf ein Abtastfenster und den Abtastzyklus umgeschaltet. Der Abtastzyklus wird jedoch erst zum Ablauf gebracht, wenn ein entsprechendes Signal der ueberwachten oder zu steuernden Einrichtung eintrifft. Es ist aber auch moeglich, den Kalibrierzyklus mit oder ohne Abstaenden weiterlaufen zu lassen, bis das Abtastfenster geoeffnet wird. Die Steuerung der Abfolge der Kalibriervorgaenge, d.h. einer Kalibrierreihenfolge, innerhalb eines Kalibrierzyklus kann auch so erfolgen, dass auch im Abtastfenster kalibriert wird, indem die nicht unterbrochenen Strahlen zur Kalibrierung freigegeben werden. Dies kann in Abweichung von einer oder mehrerer vorgebbarer Kalibrierreihenfolgen fuer die Arbeits-Abtaststrahlen S erfolgen.

Auch hier bewirkt die Modifikation des Kalibrierwertes mit einem Faktor eine gewisse minimale Lichtreserve für den Betrieb der Lichtschranke, damit diese sicher und zuverlaessig arbeitet.

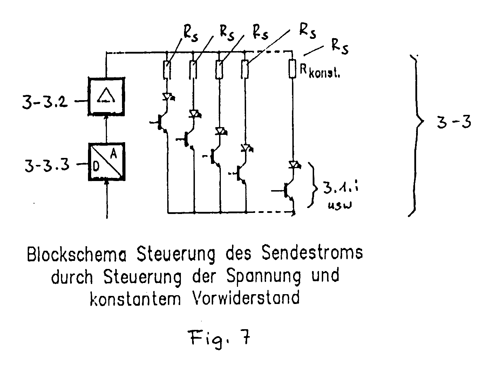

Der Senderkreis in einer 3. Art 3-3 [Fig. 7] weist eine Anzahl Sender 3.1.i auf, wobei vor den Eingang eines jeden Senders 3.1.i je ein {fuer alle Sender gleicher} Vorwiderstand Rs geschaltet ist, wobei deren Eingaenge an einen gemeinsamen Verstaerker 3-3.2 angeschlossen sind, der mit seinem Eingang an einem D/A-Wandler 3-3.3 liegt, dessen Eingang an einem Ausgang Au des Steuerkreises 2 liegt, und dass die Sender mit je ihnen zugeordneten Ausgaengen Ai des Steuerkreises 2 verbunden sind. Bei dieser 3. Variante eines Senderkreises 3-3 wird der Sendestrom durch die Steuerung der Spannung bei einem konstanten Vorwiderstand Rs gesteuert.

Bei einer weiteren Variante einer Lichtschranke sind in jedem der Steuerkreise 2, Steuermittel vorgesehen, die die Abtastzyklen des Abtastfensters und die Kalibrierzyklen einander ueberlagern. Dies kann eine einfache Verschachtelung der ganzen Zyklen oder aber eine Verschachtelung der Abtast- bzw. Kalibriervorgaenge der einzelnen Zyklen sein. Es koennen also nicht nur Zyklen aufeinander folgen, z.B. ein Abtastzyklus auf einen Kalibrierzyklus etc., sondern es koennen auch die einzelnen Vorgaenge fuer die Arbeits-Abtaststrahlengaenge S, z.B. ein Abtastvorgang auf einen Kalibriervorgang etc., aufeinander folgen. Dabei kann beispielsweise sowohl der Kalibriervorgang als auch der Abtastvorgang permanent statffinden. Sobald ein Arbeits-Abtaststrahlengang S als unterbrochen gemeldet wird und er noch kalibriert werden sollte, wird er aus der temporaer vorgesehenen Kalibrierreihenfolge herausgenommen und fuer diesen Arbeits-Abtaststrahlengang S die zuletzt eruierten Arbeits-Kalibrierwerte bis zur naechsten Kalibrierung verwendet. Als naechster Schritt wird vorzugsweise ein Abtastvorgang beim naechsten Arbeits-Abtaststrahlengang S der Abtastreihenfolge oder ev. beim benachbarten Arbeits-Abtaststrahlengang S durchgefuehrt. Ist auch dieser naechste Arbeits-Abtaststrahlengang S unterbrochen, wird auch er aus der Kalibrierreihenfolge herausgenommen, usw., solange ev. vorgesehene Kontroll-Arbeits-Abtaststrahlengaenge, welche ausserhalb eines moeglichen Abdeckbereiches durch ein Objekt liegend vorgesehen sein koennen, ein Kontrollsignal geben oder solange andere Plausibilitaetsbedingungen fuer die richtige Funktion der gesamten Lichtschranke erfuellt sind. Sobald wieder ein Arbeits-Abtaststrahlengang S als nicht unterbrochen gemeldet wurde, wird die vorgesehene Kalibrierreihenfolge wieder aufgenommen, bis der naechste Arbeits-Abtaststrahlengang S als unterbrochen gemeldet wird usw. Dabei kann die vorgesehene Kalibrierreihenfolge beim aktuellen Arbeits-Abtaststrahlengang S fortgesetzt oder es kann eine ad hoc-Kalibrierreihenfolge gebildet werden, welche nach bestimmten Sicherheitskriterien in Bezug auf die aktuellen Systemparameter zusammengestellt wird. Dabei braucht nicht jede Kalibrierreihenfolge alle Arbeits-Abtaststrahlengaenge S zu enthalten; es genuegt, wenn durch mehrere Kalibrierreihenfolgen alle Arbeits-Abtaststrahlengaenge S innerhalb eines Sicherheitsaspekten genuegenden Zeitraumes kalibriert werden. Die Kalibrierreihenfolgen koennen auch je nach ihrer Lage innerhalb oder ausserhalb eines Abtastfensters verschieden bezueglich Auswahl und Anzahl der Arbeits-Abtaststrahlengaenge S vorgesehen sein.

Um zu verhindern, dass ein waehrend des Kalibriervorganges in den Arbeits-Abtaststrahlengan S gelangtes Objekt den Kalibriervorgang beeintraechtigt und dadurch zu falschen Ergebnissen fuehrt, wird nach jedem Kalibrierschritt nochmals kontrolliert, ob der Empfaenger mit dem vor der Kalibrierung benutzten Wert, z.B. der Sendeleistung etc., noch anspricht. Ist dies der Fall, wird die Kalibrierung fortgesetzt. Andernfalls wird die Kalibrierung abgebrochen und der vor der Stoerung gueltige Wert weiterhin benutzt und ein Sicherheitssignal zur Einnahme einer Sicherheitsposition der ueberwachten Einrichtung, z.B. die Schliessung oder Oeffnung einer Sicherheitsabdeckung, die Abschaltung einer Maschine, das Anfahren einer bestimmten Position etc., in Abhaengigkeit von den anderen Systemparametern und ev. Sicherheitskriterien in Parameterform, gegeben.

Darueberhinaus koennen bei einer weiteren Variante bei einem Kalibrierzyklus 5. Art der Verstaerkungsfaktor des Empfaengers 4.1.i alternierend mit der Sendeleistung des Senders 3.1.i von einem unter einer Schaltschwelle des dem Verstaerker nachgeschalteten Schwellwertschalters fuer das Empfaengersignal liegenden Wert kontinuierlich oder diskontinuierlich erhoeht werden, bis dieses einen Wert ueber der Schaltschwelle, des Grenz-Empfaengersignals aufweist. Anschliessend wird sowohl der zugehoerige Verstaerkungsfaktor-Schwellwert wie auch der zugehoerige Sendeleistungs-Grenzwert mit je einem Faktor multipliziert, um den Abtast-Verstaerkungsfaktor bzw. um die Abtast-Sendeleistung [la] zu bilden, wobei beide etwas groesser als der Verstaerkungsfaktor-Schwellwert bzw. der Sendeleistungs-Grenzwert sein sollen. Beide, Abtast-Verstaerkungsfaktor und Abtast-Sendeleistung werden fuer die Verwendung beim Abtastzyklus abgespeichert.

Bei einer Zweiweg-Lichtschranke koennen dieselben Baugruppen, wie sie oben fuer die Einweg-Lichtschranke beschrieben wurden, eingesetzt werden, wenn Sender und Empfaenger auf derselben Seite und ihnen gegenueber, auf der anderen Seite des ueberwachten Raumes, entsprechende, mit den Sendern und Empfaengern zusammenwirkende Reflektoren ... vorgesehen sind.

Auch koennen bei allen beschriebenen Lichtschranken sowohl stark gebuendelte wie auch dispergierende Lichtstrahlen eingesetzt werden. Insbesondere sind als Lichtstrahlen Laserstrahlen oder gepulste Laserstrahlen einsetzbar. Werden divergierende Lichtstrahlen verwendet, dann koennen diese so angeordnet werden, dass sich die Strahlungsbereiche der einzelnen Sender ueberlappen oder nicht ueberlappen.

Ebenso kann in jedem Strahlengang ein gleichdrehendes Zirkularpolfilterpaar vorgesehen sein, wobei der Polarisator im Bereich des Senders und der Analysator im Bereich des Empfaengers angeordnet ist.

## Patentansprüche

1. Verfahren zur Steuerung einer Lichtschranke, bei der eine Anzahl zusammenwirkender Sender und Empfaenger mehrere Abtaststrahlengaenge ergeben, wobei die Abtaststrahlen einen zu ueberwachenden Bereich eines zu ueberwachenden Objektes mehr oder minder erfuellen, wobei Abtastzyklen, in welchen das Vorhandensein von im wesentlichen allen Abtaststrahlen detektiert wird, von dem zu ueberwachenden Objekt oder einem mit diesem zusamenwirkenden Steuergeraet ausgeloest werden und dieses wenigstens ein externes Steuersignal an ein externes Geraet je nach Abtastergebnis abgibt, dadurch **gekennzeichnet**, dass
eine paarweise Zuordnung je eines Senders und eines Empfaengers als Arbeits-Abtaststrahlengang temporaer als variabel gebildet wird,
dass wenigstens ein Kalibrierzyklus zur Selbststeuerung einzelner Betriebs-Kenngroessen jeweiliger Sender-Empfaengerpaarungen entsprechend den Arbeits-Abtaststrahlengaengen der Lichtschranke ausgefuehrt wird,
dass ein Abtasffenster von einer Steuerfunktion des zu ueberwachenden Geraetes durch ein Steuergeraet geoeffnet wird,
dass im Abtastfenster wenigstens ein Abtastzyklus der Arbeits-Abtaststrahlengaenge vorgenommen wird.

2. Verfahren nach Anspruch 1, dadurch gekennzeichnet, dass wenigstens ein Abtastzyklus auf einen Kalibrierzyklus oder umgekehrt folgt.

3. Verfahren nach Anspruch 1, dadurch gekennzeichnet, dass wenigstens ein Abtastzyklus auf mehrere Kalibrierzyklen oder umgekehrt folgt.

4. Verfahren nach Anspruch 2 oder 3, dadurch gekennzeichnet, dass wenigstens ein Abtastzyklus einem Kalibrierzyklus oder mehreren Kalibrierzyklen ganz oder teilweise ueberlagert wird.

5. Verfahren nach Anspruch 4, dadurch gekennzeichnet, dass die Ueberlagerung als eine einfache Verschachtelung der ganzen Zyklen oder aber als eine Verschachtelung der Abtast- bzw. Kalibriervorgaenge der einzelnen Zyklen vorgenommen wird und dabei die einzelnen Abtast- bzw. Kalibrierschritte multiplexartig ineinander verschachtelt werden und verschachtelte Kalibrier- und Abtastreihenfolgen bilden.

6. Verfahren nach Anspruch 4 oder 5, dadurch gekennzeichnet, dass wenigstens ein Abtastzyklus gegenueber dem Kalibrierzyklus oder den Kalibrierzyklen mit erster Prioritaet der Abarbeitung ueberlagert wird.

7. Verfahren nach einem der Ansprueche 1, 2 oder 3, dadurch gekennzeichnet, dass die Kalibrierfolge der Arbeits-Abtaststrahlengaenge innerhalb eines Kalibrierzyklus nach einem festen oder von Kalibrierzyklus zu Kalibrierzyklus wechselnden Ablaufschema festgelegt wird.

8. Verfahren nach Anspruch 4 oder 5, dadurch gekennzeichnet, dass die Kalibrierfolge der Arbeits-Abtaststrahlengaenge innerhalb eines ueberlagerten Kalibrierzyklus aus Arbeits-Abtaststrahlengaengen gebildet wird, welche im Abtastzyklus als nicht unterbrochen gemeldet wurden.

9. Verfahren nach Anspruch 8, dadurch gekennzeichnet, dass sowohl Kalibriervorgang als auch Abtastvorgang permanent stattfinden, dass ein Abtastvorgang auf einen Kalibriervorgang etc. folgt, und wenn ein Arbeits-Abtaststrahlengang als unterbrochen gemeldet wird der noch kalibriert werden sollte, wird er aus der temporaer vorgesehenen Kalibrierreihenfolge herausgenommen und fuer diesen Arbeits-Abtaststrahlengang die zuletzt eruierten Arbeits-Kalibrierwerte bis zur naechsten Kalibrierung verwendet, anschliessend wird als naechster Schritt vorzugsweise ein Abtastvorgang beim naechsten Arbeits-Abtaststrahlengang der Abtastreihenfolge oder ev. beim benachbarten Arbeits-Abtaststrahlengang durchgefuehrt und festgestellt, ob auch dieser naechste Arbeits-Abtaststrahlengang unterbrochen ist, wobei zutreffendenfalls auch er aus der Kalibrierreihenfolge herausgenommen wird, solange bis von ev. vorgesehenen Kontroll-Arbeits-Abtaststrahlengaengen, welche ausserhalb eines moeglichen Abdeckbereiches durch ein Objekt liegend vorgesehen sind, ein Kontrollsignal gegeben wird oder solange andere Plausibilitaetsbedingungen fuer die richtige Funktion der gesamten Lichtschranke erfuellt sind, dass beim naechsten als nicht unterbrochen gemeldetem Arbeits-Abtaststrahlengang die vorgesehene Kalibrierreihenfolge wieder aufgenommen wird, bis der naechste Arbeits-Abtaststrahlengang als unterbrochen gemeldet wird usw., wobei die vorgesehene Kalibrierreihenfolge beim aktuellen Arbeits-Abtaststrahlengang fortgesetzt oder eine ad hoc-Kalibrierreihenfolge gebildet wird, welche nach bestimmten Sicherheitskriterien in Bezug auf die aktuellen Systemparameter zusammengestellt wird.

10. Verfahren nach einem der Ansprueche 4 bis 9, dadurch gekennzeichnet, dass nicht in jeder Kalibrierreihenfolge alle Arbeits-Abtaststrahlengaenge kalibriert werden, wobei durch mehrere Kalibrierreihenfolgen alle Arbeits-Abtaststrahlengaenge innerhalb eines Sicherheitsaspekten genuegenden Zeitraumes kalibriert werden.

11. Verfahren nach einem der Ansprueche 4 bis 10, dadurch gekennzeichnet, dass die Kalibrierreihenfolgen je nach ihrer Lage innerhalb oder ausserhalb eines Abtastfensters verschieden bezueglich Auswahl und Anzahl der Arbeits-Abtaststrahlengaenge sind.

12. Verfahren nach einem der Ansprueche 4 bis 11, dadurch gekennzeichnet, dass nach jedem Kalibrierschritt kontrolliert wird. ob der Empfaenger mit dem vor der Kalibrierung benutzten Wert noch anspricht und im Zutreffensfall die Kalibrierung fortgesetzt andernfalls die Kalibrierung abgebrochen wird, wobei der vor der Stoerung gueltige Wert weiterhin benutzt und ein Sicherheitssignal zur Einnahme einer Sicherheitsposition der ueberwachten Einrichtung abgegeben wird.

13. Verfahren nach Anspruch 1 bis 12, dadurch gekennzeichnet, dass der Kalibrierzyklus die Strahlintensitaet und / oder Empfangs-empfindlichkeit fuer die Arbeits-Abtaststrahlengaenge ermittelt und fuer wenigstens einen Abtastzyklus speichert.

14. Verfahren nach Anspruch 13, dadurch gekennzeichnet, dass bei einem Kalibrierzyklus 1. Art der Sender auf einen konstanten Kalibrier-Leistungswert eingestellt wird und der Verstaerkungsfaktor des Verstaerkers fuer jeden Arbeits-Abtaststrahlengang, ausgehend von einem Verstaerkungsfaktor, der einem unter einem Schaltschwellwert eines Schaltelementes liegenden Wert entspricht, kontinuierlich oder diskontinuierlich angehoben wird bis er den Verstaerkungsfaktor, der dem Schaltschwellwert entspricht, erreicht,
dass anschliessend dieser mit einem Faktor multipliziert wird, um den Atast-Verstaerkungsfaktor zu bilden, wobei dieser etwas groesser als der Schwellwertverstaerkungsfaktor sein soll und
dass dieser Abtast-Verstaerkungsfaktor fuer die Verwendung beim Abtastzyklus abgespeichert wird.

15. Verfahren nach Anspruch 1, dadurch gekennzeichnet, dass das Abtastfenster von der zu ueberwachenden Einrichtung oder von einer Ablaufsteuerfolge geoeffnet wird.

16. Verfahren nach Anspruch 13, dadurch gekennzeichnet, dass bei einem Kalibrierzyklus 2. Art der Empfaenger auf einen konstanten KalibrierEmpfindlichkeitswert eingestellt wird und die Intensitaet / Leistung [I] des Senders, ausgehend von einem vom dem betrachteten Arbeits-Abtaststrahlengang zugeordneten Empfaenger nicht mehr empfangbaren Wert, kontinuierlich oder diskontinuierlich erhoeht wird, bis der Empfaenger ein Signal bei einem Intensitaetsgrenzwert [Ig] wahrnimmt und
dass anschliessend dieser mit einem Faktor multipliziert wird, um die Abtast-lntensitaet [la] zu bilden, wobei diese etwas groesser als der Intensitaetsgrenzwert [Ig] sein soll und
dass dieser Abtast-Verstaerkungsfaktor fuer die Verwendung beim Abtastzyklus abgespeichert wird.

17. Verfahren nach Anspruch 13, dadurch gekennzeichnet, dass bei einem Kalibrierzyklus 3. Art einerseits die Intensitaet [I] des Senders, ausgehend von einem vom dem betrachteten Arbeits-Abtaststrahlengang zugeordneten Empfaenger nicht mehr empfangbaren Wert, kontinuierlich oder diskontinuierlich erhoeht wird, bis der Empfaenger ein Signal bei einem Intensitaetsgrenzwert [Ig] wahrnimmt und
dass anschliessend dieser mit einem Faktor multipliziert wird, um die Abtast-lntensitaet [la] zu bilden, wobei diese etwas groesser als der Intensitaetsgrenzwert [Ig] sein soll und
dass dieser Abtast-Verstaerkungsfaktor fuer die Verwendung beim Abtastzyklus abgespeichert wird und
dass andererseits parallel / gleichzeitig zur Erhoehung der Intensitaet [I] des Senders der Verstaerkungsfaktor des Verstaerkers fuer jeden Arbeits-Abtaststrahlengang, ausgehend von einem Verstaerkungsfaktor, der einem unter einem Schaltschwellwert eines Schaltelementes liegenden Wert entspricht, kontinuierlich oder diskontinuierlich angehoben wird bis er den Verstaerkungsfaktor, der dem Schaltschwellwert entspricht, erreicht,
dass anschliessend dieser mit einem Faktor multipliziert wird, um den Atast-Verstaerkungsfaktor zu bilden, wobei dieser etwas groesser als der Schwellwertverstaerkungsfaktor sein soll und
dass dieser Abtast-Verstaerkungsfaktor fuer die Verwendung beim Abtastzyklus abgespeichert wird.

18. Verfahren nach Anspruch 13, dadurch gekennzeichnet, dass bei einem Kalibrierzyklus 4. Art der Verstaerkungsfaktor des Empfaengers alternierend mit der Sendeleistung des Senders kontinuierlich oder diskontinuierlich erhoeht wird bis einerseits ein Verstaerkungsfaktor-Schwellwert und andererseits ein Sendeleistungs-Grenzwert fuer jeden Arbeits-Abtaststrahlengang erreicht wird, ausgehend einerseits von einem Verstaerkungsfaktor, der einem unter einem Schaltschwellwert eines Schaltelementes liegenden Wert entspricht, und ausgehend andererseits von einem vom dem betrachteten Arbeits-Abtaststrahlengang zugeordneten Empfaenger nicht mehr empfangbaren Wert der Sendeleistung,
dass anschliessend sowohl der Verstaerkungsfaktor-Schwellwert wie auch der Sendeleistungs-Grenzwert mit je einem Faktor multipliziert werden, um den Atast-Verstaerkungsfaktor bzw. um die Abtast-Sendeleistung [la] zu bilden, wobei beide etwas groesser als der Verstaerkungsfaktor-Schwellwert bzw. der SendeleistungsGrenzwert sein sollen und
dass beide, Abtast-Verstaerkungsfaktor und Abtast-Sendeleistung, fuer die Verwendung beim Abtastzyklus abgespeichert werden.

19. Verfahren nach Anspruch 13. dadurch gekennzeichnet, dass bei einem Kalibrierzyklus 5. Art der Verstaerkungsfaktor des Empfaengers alternierend mit der Sendeleistung des Senders von einem unter einer Schaltschwelle des dem Verstaerker nachgeschalteten Schwellwertschalters fuer das Empfaengersignal liegenden Wert kontinuierlich oder diskontinuierlich erhoeht wird bis dieses einen Wert ueber der Schaltschwelle, des Grenz-Empfaengersiganls aufweist, und
dass anschliessend sowohl der zugehoerige Verstaerkungsfaktor-Schwellwert wie auch der zugehoerige Sendeleistungs-Grenzwert mit je einem Faktor multipliziert werden, um den Abtast-Verstaerkungsfaktor bzw. um die Abtast-Sendeleistung [la] zu bilden, wobei beide etwas groesser als der Verstaerkungsfaktor-Schwellwert bzw. der Sendeleistungs-Grenzwert sein sollen und
dass beide, Abtast-Verstaerkungsfaktor und Abtast-Sendeleistung, fuer die Verwendung beim Abtastzyklus abgespeichert werden.

20. Verfahren nach Anspruch 1 bis 13, dadurch gekennzeichnet, dass die paarweise Zuordnung je eines Senders und eines Empfaengers als Arbeits-Abtaststrahlengang temporaer in der Weise gebildet wird, dass je einem Sender in wenigstens einer Empfaenger-Reihenfolge mehrere Empfaenger zugeordnet werden und dass diese Zuordnungen fuer alle Sender in wenigstens einer Sender-Reihenfolge vorgenommen wird.

21. Verfahren nach Anspruch 20, dadurch gekennzeichnet, dass die paarweise Zuordnung je eines Senders und eines Empfaengers als Arbeits-Abtaststrahlengang temporaer in der Weise gebildet wird, dass sowohl innerhalb einer Empfaenger-Reihenfolge wie auch innerhalb einer Sender-Reihenfolge fuer jeden Arbeits-Abtaststrahlengang geprueft wird, ob dieser Arbeits-Abtaststrahlengang unterbrochen ist, wobei nach der Feststellung eines unterbrochenen Arbeits-Abtaststrahlenganges in Fortschreitungsrichtung der Empfaenger- bzw. der Sender-Reihenfolge der beziehungsweise geometrisch benachbarte naechste Arbeits-Abtaststrahlengang als Zuordnung gebildet wird, bis kein Arbeits-Abtaststrahlengang mehr als unterbrochen festgestellt wird und anschliessend die Zuordnung in der urspruenglich begonnenen Empfaenger-Reihenfolge bzw. Sender-Reihenfolge fortgesetzt wird, wobei die als unterbrochen festgestellten Arbeits-Abtaststrahlengaenge nicht kalibriert werden.

22. Verfahren nach Anspruch 1 bis 20, dadurch gekennzeichnet, dass die paarweise Zuordnung je eines Senders und eines Empfaengers als Arbeits-Abtaststrahlengang temporaer in der Weise gebildet wird,
dass in einem Einstelldurchgang jeder Sender auf einen konstanten Einstell-Leistungswert und jeder Empfaenger auf einen konstanten Einstell-Verstaerkungsfaktor eingestellt wird,
dass anschliessend bei jedem Abtaststrahlengang, d.h. einer Sender-Empfaengerpaarung, ein Optimierzyklus zur Feststellung der Lage der maximalen Intensitaet innerhalb des Abtaststrahlenganges vorgenommen wird und
dass diese Lage des Intensitaetsmaximums zur Zuordnung je eines Senders zu einem Empfaenger als optimal wirksamer Arbeits-Abtaststrahlengang verwendet wird.

23. Verfahren nach einem der Ansprueche 1 bis 22, dadurch gekennzeichnet, dass an dem Abtaststrahl benachbarten Flaechen auftretende Reflexionen verhindert bzw. ausgeschaltet werden, damit sie das Abtastergebnis bzw. die auf dem Empfaenger auftreffende Senderleistung nicht beeinflussen koennen.

24. Verfahren nach Anspruch 23, dadurch gekennzeichnet, dass das jeden Sender verlassende Licht zirkular polarisiert und ein eventuell auf den Empfaenger treffender reflektierter Stoerstrahl ausgefiltert wird.

25. Verfahren nach Anspruch 24, dadurch gekennzeichnet, dass das jeden Sender verlassende Licht mittels Blenden oder Linsen gebuendelt wird.

26. Verfahren nach Anspruch 24, dadurch gekennzeichnet, dass als Senderlicht ein gebuendeltes Licht verwendet wird.

27. Lichtschranke fuer die Abgabe eines Steuersignals mit einer Anzahl zusammenwirkender Sender und Empfaenger, wobei Sender bzw. Empfaenger in Abtastzyklen von einem Auswertekreis aktiviert werden, zur Durchfuehrung des Verfahrens nach Anspruch 1, dadurch **gekennzeichnet**, dass
der Auswertekreis als ein kalibrierbarer Auswertekreis [1] zur Selbststeuerung der Arbeits-Einstellgroessen der jeweiligen Arbeits-Abtaststrahlen [S] d.h. Sender-Empfaengerpaarung und der Aktivierungsreihenfolge der Arbeits-Abtaststrahlen [S] der Lichtschranke ausgebildet ist und einen Steuerkreis [2] enthaelt, der an Lese- und Arbeitsspeicher [2.1 bzw. 2.2] und an eine Clock [1.3] sowie an das zu steuernde Objekt mit einem Steuer-Ausgang [As] fuer ein Ausgangs-Steuersignal und einen Eingang [E3] fuer Eingangs-Steuersignal angeschlossen ist sowie Zuordnungsmittel aufweist, welche je einen Sender [3.1.1, 3.1.2, usw.] eines Senderkreises [3]- und je einen Empfaenger [4.1.1, 4.12, usw.] eines Empfaengerkreises [4] temporaer je fuer eine Phase des Betriebes einander zuordnen.

28. Lichtschranke nach Anspruch 27, dadurch gekennzeichnet, dass der kalibrierbare Auswertekreis wenigstens einen Kalibrierkreis 1. Art [5-1] zur Selbststeuerung der Intensitaet jedes Abtaststrahls [S] aufweist.

29. Lichtschranke nach Anspruch 27, dadurch gekennzeichnet, dass der kalibrierbare Auswertekreis wenigstens einen Kalibrierkreis 2. Art [5-2] zur Selbststeuerung der Empfindlichkeit des Empfaengers [4.1.i] aufweist.

30. Lichtschranke nach einem der Ansprueche 27 bis 29, dadurch gekennzeichnet, dass sich die Strahlungsbereiche der einzelnen Sender [3.1.i] ueberlappen.

31. Lichtschranke nach einem der Ansprueche 27 bis 29, dadurch gekennzeichnet, dass sich die Strahlungsbereiche der einzelnen Sender [3.1.i] nicht ueberlappen.

32. Lichtschranke nach einem der Ansprueche 27 bis 29, dadurch gekennzeichnet, dass als Sender [3.1.i] Laserstrahlsender vorgesehen sind.

33. Lichtschranke nach einem der Ansprueche 27 bis 29. dadurch gekennzeichnet, dass als Sender [3.1.i] gepulste Laserstrahlsender vorgesehen sind.

34. Lichtschranke nach einem der Ansprueche 27 bis 33, dadurch gekennzeichnet, dass in jedem Strahlengang ein gleichdrehendes Zirkularpolfilterpaar vorgesehen ist, wobei der Polarisator im Bereich des Senders und der Analysator im Bereich des Empfaengers angeordnet ist.

35. Lichtschranke nach Anspruch 28, dadurch gekennzeichnet, dass der Kalibrierkreis 1. Art [5-1] zur Selbststeuerung der Intensitaet jedes Abtaststrahls fuer jeden Empfaenger [4.1.i] einen am Ausgang des dem Empfaenger [4.1.i] zugeordneten Verstaerkers [4.2.i] des Empfaengerkreises [4] liegenden Schwellwertschalter [5-1.1.i] und ein von diesem angespeistes Flip-Flop [5-1.2.i] aufweist, welches sowohl mit einem fuer alle Empfaenger [4.1.i] gemeinsamen ODER-Gatter [5-1.3] als auch mit einem fuer alle Empfaenger [4.1.i] gemeinsamen UND-Gatter [5-1.4] verbunden ist, wobei die Ausgaenge dieser beiden Gatter [5-1.3, 5-1.4] je an einem Eingang [E1 bzw. E2] eines Steuerkreises 1. Art [2-1] liegen und dass alle Flip-Flops [5-1.2.i] mit einem Reseteingang an einem Resetausgang [AR] des Steuerkreises [2-1] angeschlossen sind.

36. Lichtschranke nach Anspruch 29, dadurch gekennzeichnet, dass der Kalibrierkreis 2. Art [5-2] zur Messung der Signalstaerke des Empfaengers [4.1.i], wobei jeder Empfaenger [4.1.i] einen am Ausgang des dem Empfaenger [4.1.i] zugeordneten Verstaerkers [4.2.i] des Empfaengerkreises [4] mit einem Multiplexer [5-2.1] verbunden ist, welcher die Signale jedes der Verstaerker [4.2.i] einzeln an einen gemeinsamen A/D-Wandler [5-2.2] schaltet, dessen Ausgang an einem Eingang [E1] eines Steuerkreises 2. Art [2-2] liegt, welcher einen Multiplexer-Steuerausgang [Am] aufweist, der mit dem Multiplexer [5-2.1] zu dessen Ansteuerung verbunden ist.

37. Lichtschranke nach Anspruch 29, dadurch gekennzeichnet, dass der Kalibrierkreis 3. Art [5-3] zur Selbststeuerung der Empfindlichkeit des Empfaengers [4.1.i], wobei jeder Empfaenger [4.1.i] einen am Ausgang des dem Empfaenger [4.1.i] zugeordneten Verstaerkers [4.2.i] des Empfaengerkreises [4] mit einem Multiplexer [5-3.1] verbunden ist, welcher die Signale jedes der Verstaerker [4.2.i] einzeln an einen gemeinsamen Kalibrierverstaerker [5-3.2] schaltet, dessen Ausgang an einem Eingang [E1] eines Steuerkreises 3. Art [2-3] liegt, welcher einen Verstaerker-Steuerausgang [Av] aufweist, an dem ein Verstaerkersteuer-D/A-Wandler [5-3.3] liegt, der mit dem Kalibrierverstaerker [5-3.2] zu dessen Steuerung verbunden ist.

38. Lichtschranke nach Anspruch 27 bis 37, dadurch gekennzeichnet, dass der Senderkreis in einer 1. Art [3-1] eine Anzahl Sender [3.1.i] aufweist, deren Eingaenge an eine gemeinsame, geregelte Stromquelle [3-1.1] angeschlossen sind, die mit ihrem Eingang an einem D/A-Wandler [3-1.2] liegt, dessen Einang an einen Ausgang [Au] des Steuerkreises [1. oder 2. Art] angeschlossen ist und dass die Sender [3.1.i] mit je ihnen zugeordneten Ausgaengen [A0 bzw. A1 bzw. ... An] des Steuerkreises [2] verbunden sind.

39. Lichtschranke nach Anspruch 27 bis 37, dadurch gekennzeichnet, dass der Senderkreis in einer 2. Art [3-2] eine Anzahl Sender [3.1.i] aufweist, deren Eingaenge an eine gemeinsame, geregelte Stromquelle [3-2.1] angeschlossen sind, die mit ihrem Eingang an einem Ausgang [Au] des Steuerkreises [1. oder 2. Art] angeschlossen ist und dass die Sender [3.1.i] mit je ihnen zugeordneten Ausgaengen [A0 bzw. A1 bzw.... An] des Steuerkreises [2] verbunden sind.

40. Lichtschranke nach Anspruch 27 bis 37, dadurch gekennzeichnet, dass der Senderkreis in einer 3. Art [3-3] eine Anzahl Sender [3.1.i] aufweist, deren Eingaenge an einen gemeinsamen Verstaerker [3-3.2] angeschlossen sind, der mit seinem Eingang an einem D/A-Wandler [3-3.3] liegt, dessen Eingang an einen Ausgang [Au] des Steuerkreises [1. oder 2. Art] angeschlossen ist, dass vor den Eingang eines jeden Senders [3.1.i] ein Vorwiderstand [R] geschaltet ist und dass die Sender mit je ihnen zugeordneten Ausgaengen [A0 bzw. A1 bzw. ... An] des Steuerkreises [2] verbunden sind.

41. Lichtschranke nach Anspruch 27 bis 40, dadurch gekennzeichnet, dass der Empfaengerkreis [4] aus einer Anzahl parallel geschalteter Empfaengerelemente [4.1.i] und je zu diesen in Serie geschalteten Vorwiderstaenden [Re] besteht, wobei jedem Empfaengerelement [4.1.i] ein Verstaerker [4.2.i] nachgeschaltet ist, welche je ihrerseits mit je einem entsprechenden Schwellwertschalter oder Multiplexer [5-1.1.i bzw. 5-2.1 bzw. 5-3.1] eines Kalibrierkreises [5] verbunden sind.

42. Lichtschranke nach einem der Ansprueche 27 bis 41, dadurch gekennzeichnet, dass der Empfaenger [4] auf derselben Seite wie der Sender [3] und auf der ihnen gegenueberliegenden Seite ein ihnen zugeordneter Reflektor angeordnet ist.

43. Lichtschranke nach einem der Ansprueche 27 bis 41, dadurch gekennzeichnet, dass der Empfaenger [4] und der Sender [3] auf gegenueberliegenden Seiten angeordnet sind.

## Claims

1. A method for controlling a light barrier, in which a number of cooperating transmitters and receivers produce several scanning beam paths, wherein the scanning beams more or less fill an area to be monitored of an object to be monitored, wherein scanning cycles, in which the presence of essentially all the scanning beams is detected, are activated by the object to be monitored or by a control device cooperating therewith, and this issues at least one external control signal to an external device depending on the scanning result, characterized in that
coordination in pairs of one transmitter and one receiver respectively as the working scanning beam path is temporarily formed so as to be variable,
in that at least one calibrating cycle for automatically controlling individual operating parameters of each of the transmitter-receiver pairings is implemented in accordance with the working scanning beam paths of the light barrier,
in that a scanning window is opened by a control function of the device to be monitored by means of a control device,
in that in the scanning window at least one scanning cycle of the working scanning beam paths is implemented.

2. A method according to claim 1, characterized in that at least one scanning cycle follows one calibrating cycle, or vice versa.

3. A method according to claim 1, characterized in that at least one scanning cycle follows several calibrating cycles, or vice versa.

4. A method according to claim 2 or 3, characterized in that at least one scanning cycle is completely or partially superimposed on one calibrating cycle or several calibrating cycles.

5. A method according to claim 4, characterized in that the superimposition is implemented as simple interlacing of the full cycles or as interlacing of the scanning or calibrating procedures of the individual cycles, and the individual scanning or calibrating steps are interlaced into one another in a multiplex manner and form interlaced calibrating and scanning sequences.

6. A method according to claim 4 or 5, characterized in that at least one scanning cycle is superimposed with first execution priority over the calibrating cycle or the calibrating cycles.

7. A method according to one of claims 1, 2 or 3, characterized in that the calibrating sequence of the working scanning beam paths within a calibrating cycle is determined in accordance with a sequence plan which is fixed or changes from one calibrating cycle to another.

8. A method according to claim 4 or 5, characterized in that the calibration sequence of the working scanning beam paths within a superimposed calibrating cycle is formed from working scanning beam paths which are signalled in the scanning cycle as not interrupted.

9. A method according to claim 8, characterized in that both the calibrating procedure and the scanning procedure take place permanently, in that a scanning procedure follows a calibrating procedure etc., and when a working scanning beam path is signalled as interrupted, and it should still be calibrated, it is taken out of the calibration sequence temporarily provided, and the working calibration values ascertained last are used for this working scanning beam path until the next calibration, and then, as the next step, a scanning procedure with the next working scanning beam path of the scanning sequence or possibly with the adjacent working scanning beam path is preferably performed and it is determined whether this next working scanning beam path is interrupted, and if so it is also taken out of the calibration sequence, as long as a monitoring signal is given by any monitoring working scanning beam paths which may possibly be provided and which are provided lying outside a possible area covered by an object, or as long as other plausibility conditions for the correct function of the whole light barrier are met, in that with the next working scanning beam path signalled as not interrupted, the provided calibration sequence is adopted again, until the next working scanning beam path is signalled as interrupted etc., whereupon the calibration sequence provided is resumed with the current working scanning beam path or an ad hoc calibration sequence is formed which is put together in accordance with specific safety criteria with respect to the current system parameters.

10. A method according to one of claims 4 to 9, characterized in that not every calibration sequence includes the calibrating of all working scanning beam paths, all working scanning beam paths being calibrated by several calibration sequences within a period which satisfies safety aspects.

11. A method according to one of claims 4 to 10, characterized in that the calibration sequences, depending on their position inside or outside a scanning window, are different with respect to the choice and number of the working scanning beam paths.

12. A method according to one of claims 4 to 11, characterized in that after each calibration step, it is monitored whether the receiver with the value used before the calibration is still responding and if so, the calibration is resumed, or if not, the calibration is interrupted, wherein the value applying before the interruption is still used and a safety signal for the adoption of a safety position of the monitored device is issued.

13. A method according to claim 1 to 12, characterized in that the calibrating cycle determines the beam intensity and/or the reception sensitivity with respect to the working scanning beam paths and stores it/them for at least one scanning cycle.

14. A method according to claim 13, characterized in that with a calibrating cycle of the 1st type, the transmitter is set to a constant calibration power value and the amplification factor of the amplifier for each working scanning beam path, starting from an amplification factor which corresponds to a value lying below a switching threshold value of a switching element, is continuously or intermittently raised until it reaches the amplification factor corresponding to the switching threshold value, in that this is then multiplied by a factor to form the scanning amplification factor, and this should be somewhat greater than the threshold value amplification value, and in that this scanning amplication factor is stored for use in the scanning cycle.

15. A method according to claim 1, characterized in that the scanning window is opened by the device to be monitored or by an execution control sequence.

16. A method according to claim 13, characterized in that with a calibrating cycle of the 2nd type, the receiver is set to a constant calibration-sensitivity value and the intensity/power (I) of the transmitter, starting from a no longer receivable value from the receiver coordinated with the working scanning beam path being considered, is continuously or intermittently raised until the receiver detects a signal with an intensity limiting value (Ig), and
in that this is then multiplied by a factor to form the scanning intensity (la), and this should be somewhat greater than the intensity limiting value (Ig), and
in that this scanning amplification factor is stored for use in the scanning cycle.

17. A method according to claim 13, characterized in that with a calibration cycle of the 3rd type, on the one hand the intensity (I) of the transmitter, starting from a no longer receivable value from the receiver coordinated with the working scanning beam path being considered, is continuously or intermittently raised until the receiver detects a signal with an intensity limiting value (Ig), and
in that this is then multiplied by a factor to form the scanning intensity (Ia), and this should be somewhat greater than the intensity limiting value (Ig), and
in that this scanning amplification factor is stored for use in the scanning cycle, and
in that on the other hand, in parallel with / at the same time as the raising of the intensity (I) of the transmitter, the amplification factor of the amplifier for each working scanning beam path, starting from an amplification factor which corresponds to a value lying below a switching threshold value of a switching element, is continuously or intermittently raised until it reaches the amplification factor corresponding to the switching threshold value,
in that this is then multiplied by a factor to form the scanning amplification factor, and this should be somewhat greater than the threshold value amplification factor, and
in that this scanning amplification factor is stored for use in the scanning cycle.

18. A method according to claim 13, characterized in that with a calibration cycle of the 4th type, the amplification factor of the receiver, alternating with the transmitting power of the transmitter, is continuously or intermittently raised until on the one hand an amplification factor threshold value and on the other hand a transmitting power limiting value for each working scanning beam path is reached, starting on one hand from an amplification factor which corresponds to a value lying below a switching threshold value of a switching element, and starting on the other hand from a no longer receivable value of transmitting power from the receiver coordinated with the working scanning beam path being considered,
in that both the amplification factor threshold value and the transmitting power limiting value are then respectively multiplied by a factor to form the scanning amplification factor and the scanning transmitting power (Ia) respectively, and both should be somewhat greater than the amplification factor threshold value and the transmitting power limiting value respectively, and
in that both, the scanning amplification factor and the scanning transmitting power, are stored for use in the scanning cycle.

19. A method according to claim 13, characterized in that with a calibrating cycle of the 5th type, the amplification factor of the receiver, alternating with the transmitting power of the transmitter, is continuously or intermittently raised from a value lying below a switching threshold of the threshold value switch, connected in series with the amplifier, for the receiver signal, until this value exhibits a value above the switching threshold of the limiting receiver signal, and
in that both the associated amplification threshold value and the associated transmitting power limiting value are then respectively multiplied by a factor to form the scanning amplification factor and the scanning transmitting power (Ia) respectively, and both should be somewhat greater than the amplification factor threshold value and the transmitting power limiting value respectively, and
in that both, the scanning amplification factor and the scanning transmitting power, are stored for use in the scanning cycle.

20. A method according to claim 1 to 13, characterized in that the coordination in pairs of one transmitter and one receiver respectively as the working scanning beam path is temporarily formed by several receivers in at least one receiver sequence being coordinated with each one transmitter, and in that these coordinations are implemented for all transmitters in at least one transmitter sequence.

21. A method according to claim 20, characterized in that the coordination in pairs of one transmitter and one receiver respectively as the working scanning beam path is temporarily formed by checking both within a receiver sequence and within a transmitter sequence for each working scanning beam path whether this working scanning beam path is interrupted, wherein after an interrupted working scanning beam path has been determined, in the progression direction of the receiver- or transmitter sequence, the respectively geometrically adjacent, next working scanning beam path is formed as the coordination, until no further working scanning beam path is determined as interrupted and the coordination is then resumed in the originally started receiver sequence or transmitter sequence, wherein the working scanning beam paths determined as interrupted are not calibrated.

22. A method according to claim 1 to 20, characterized in that the coordination in pairs of one transmitter and one receiver respectively as the working scanning beam path is temporarily formed
by each transmitter being set to a constant set power value and each receiver being set to a constant set amplification factor in one set transmission,
by an optimization cycle then being performed with each scanning beam path, i.e. one transmitter-receiver pairing, to determine the position of the maximum intensity within the scanning beam path, and
by this position of maximum intensity being used to coordinate one transmitter with one receiver respectively as the optimum effective working scanning beam path.

23. A method according to one of claims 1 to 22, characterized in that reflections occurring at the surfaces adjoining the scanning beam are prevented or eliminated so that they cannot affect the scanning result or the transmitter power impinging on the receiver.

24. A method according to claim 23, characterized in that the light leaving each transmitter is circularly polarized and any reflected stray beam impinging on the receiver is filtered out.

25. A method according to claim 24, characterized in that the light leaving each transmitter is concentrated by means of diaphragms or lenses.

26. A method according to claim 24, characterized in that a concentrated light is used as transmitter light.

27. A light barrier for the emission of a control signal, comprising a number of cooperating transmitters and receivers, wherein transmitters and receivers are respectively activated in scanning cycles by an evaluating circuit, for the implementation of the method according to claim 1, characterized in that
the evaluating circuit is designed as a calibratable evaluating circuit (1) for automatically controlling the working set values of the respective working scanning beams (S), i.e. the transmitter-receiver pairing, and of the activation sequence of the working scanning beams (S) of the light barrier, and comprises a control circuit (2) which is connected to read- and working memories (2.1 and 2.2 respectively) and to a clock (1.3) [sic, recte 2.3] and also to the object to be controlled by a control output (As) for an output control signal and an input (E3) for an input control signal, and has coordination means which coordinate one transmitter (3.1.1, 3.1.2, etc.) respectively of a transmitter circuit (3) and one receiver (4.1.1, 4.1.2, etc.) respectively of a receiver circuit (4) with one another temporarily for each one phase of the operation.

28. A light barrier according to claim 27, characterized in that the calibratable evaluating circuit has at least a calibrating circuit of the 1st type (5-1) for automatically controlling the intensity of each scanning beam (S).

29. A light barrier according to claim 27, characterized in that the calibratable evaluation circuit has at least a calibrating circuit of the 2nd type (5-2) for automatically controlling the sensitivity of the receiver (4.1.i).

30. A light barrier according to one of claims 27 to 29, characterized in that the emission ranges of the individual transmitters (3.1.i) overlap.

31. A light barrier according to one of claims 27 to 29, characterized in that the emission ranges of the individual transmitters (3.1.i) do not overlap.

32. A light barrier according to one of claims 27 to 29, characterized in that laser beam transmitters are provided as transmitters (3.1.i).

33. A light barrier according to one of claims 27 to 29, characterized in that pulsed laser beam transmitters are provided as transmitters (3.1.i).

34. A light barrier according to one of claims 27 to 33, characterized in that a circular polarization filter pair rotating the same way is provided in each beam path, the polarizer being arranged in the region of the transmitter and the analyzer in the region of the receiver.

35. A light barrier according to claim 28, characterized in that the calibrating circuit of the 1st type (5-1) for automatically controlling the intensity of each scanning beam has for each receiver (4.1.i) a threshold value switch (5-1.1.i) connecting to the output of the amplifier (4.2.i) of the receiver circuit (4), coordinated with the receiver (4.1.i), and a flip-flop (5-1.2.i), supplied by the said threshold value switch, which is connected both to an OR-gate (5-1.3) common to all receivers (4.1.i) and to an AND-gate (5-1.4) common to all receivers (4.1.i), the outputs of these two gates (5-1.3, 5-1.4) respectively connecting to an input (E1 and E2 respectively) of a control circuit of the 1st type (2-1), and in that all flip-flops (5-1.2.i) are connected by a reset input to a reset output (AR) of the control circuit (2-1).

36. A light barrier according to claim 29, characterized in that the calibrating circuit of the 2nd type (5-2) [is used] for measuring the signal strength of the receiver (4.1.i), wherein each receiver (4.1.i) is connected at the output of the amplifier (4.2.i) of the receiver circuit (4), coordinated with the receiver (4.1.i), to a multiplexer (5-2.1) which switches the signals of each of the amplifiers (4.2.i) individually to a common A/D converter (5-2.2) whose output connects to an input (E1) of a control circuit of the 2nd type (2-2) which has a multiplexer control output (Am) connected to the multiplexer (5-2.1) for the activation thereof.

37. A light barrier according to claim 29, characterized in that the calibrating circuit of the 3rd type (5-3) [is used] for automatically controlling the sensitivity of the receiver (4.1.i), wherein each receiver (4.2.i) is connected at the output of the amplifier (4.2.i) of the receiver circuit (4), coordinated with the receiver (4.1.i), to a multiplexer (5-3.1) which switches the signals of each of the amplifiers (4.2.i) individually to a common calibration amplifier (5-3.2) whose output connects to an input (El) of a control circuit of the 3rd type (2-3) which has an amplifier control output (Av) to which an amplifier control D/A converter (5-3.3) connects, the said amplifier control D/A converter being connected to the calibration amplifier (5-3.2) for the controlling thereof.

38. A light barrier according to claim 27 to 37, characterized in that the transmitter circuit of a 1st type (3-1) has a number of transmitters (3.1.i) whose inputs are connected to a common, regulated current source (3-1.1), the input of which connects to a D/A converter (3-1.2) whose input is connected to an output (Au) of the control circuit (1st or 2nd type), and in that the transmitters (3.1.i) are connected to outputs (A0 or A1 or ... An) of the control circuit (2) respectively coordinated with them.

39. A light barrier according to claim 27 to 37, characterized in that the transmitter circuit of a 2nd type (3-2) has a number of transmitters (3.1.i) whose inputs are connected to a common, regulated current source (3-2.1), the input of which is connected to an output (Au) of the control circuit (1st or 2nd type), and in that the transmitters (3.1.i) are connected to outputs (A0 or A1 or ... An) of the control circuit (2) respectively coordinated with them.

40. A light barrier according to claim 27 to 37, characterized in that the transmitter circuit of a 3rd type (3-3) has a number of transmitters (3.1.i) whose inputs are connected to a common amplifier (3-3.2), the input of which connects to a D/A converter (3-3.2) whose input is connected to an output (Au) of the control circuit (1st or 2nd type), in that a series resistor (R) is connected before the input of each transmitter (3.1.i), and in that the transmitters are connected to outputs (A0 or A1 or ... An) of the control circuit (2) respectively coordinated with them.

41. A light barrier according to claim 27 to 40, characterized in that the receiver circuit (4) consists of a number of receiver elements (4.1.i) connected in parallel and series resistors (Re) respectively connected in series with them, wherein there are connected on the output side of each receiver element (4.1.i) respective amplifiers (4.2.i) which are themselves respectively connected to a corresponding threshold value switch or multiplexer (5-1.1.i or 5-2.1 or 5-3.1) of a calibrating circuit (5).

42. A light barrier according to one of claims 27 to 41, characterized in that the receiver (4) is arranged on the same side as the transmitter (3), and a reflector coordinated with them is arranged on the opposite side to them.

43. A light barrier according to one of claims 27 to 41, characterized in that the receiver (4) and the transmitter (3) are arranged on opposite sides.

## Revendications

1. Procédé destiné à commander une barrière photo-électrique, dans laquelle un certain nombre d'émetteurs et de récepteurs agissant conjointement génèrent plusieurs trajectoires de rayons de détection, les rayons de détection remplissant plus ou moins une zone à surveiller d'un objet à surveiller, des cycles de détection, pendant lesquels la présence de tous les rayons de détection est détectée, étant déclenchés par l'objet à surveiller ou par un appareil de commande agissant conjointement avec celui-ci, ledit appareil de commande délivrant au minimum un signal de commande externe à un appareil extérieur conformément au résultat de la détection, caractérisé par le fait
qu'une affectation par paire d'un émetteur et d'un récepteur sous la forme d'une trajectoire utile des rayons de détection est formée temporairement sous forme de variable,
qu'au minimum un cycle de calibrage destiné à la commande automatique de chacun des paramètres utiles des différents couples émetteur - récepteur est réalisé conformément aux trajectoires utiles des rayons de détection de la barrière photoélectrique,
qu'une fenêtre de détection d'une fonction de commande de l'appareil à surveiller est ouverte par un appareil de commande, et
que dans la fenêtre de détection est effectué au moins un cycle de détection de la trajectoire utile des rayons de détection.

2. Procédé conforme à la revendication 1, caractérisé par le fait qu'au minimum un cycle de détection suit un cycle de calibrage ou inversement.

3. Procédé conforme à la revendication 1, caractérisé par le fait qu'au minimum un cycle de détection suit plusieurs cycles de calibrage ou inversement.

4. Procédé conforme à la revendication 2 ou 3, caractérisé par le fait qu'au minimum un cycle de détection est superposé entièrement ou partiellement à un ou plusieurs cycles de calibrage.

5. Procédé conforme à la revendication 4, caractérisé par le fait que la superposition est effectuée sous la forme d'une entrelacement simple de tous les cycles ou encore sous la forme d'un entrelacement des opérations de détection ou de calibrage de chacun des cycles et que, de ce fait, les étapes de détection ou de calibrage sont chacune entrelacées l'une à la suite de l'autre par multiplexage et forment des séquences de calibrage et de détection entrelacées.

6. Procédé conforme à la revendication 4 ou 5, caractérisé par le fait qu'au minimum un cycle de détection est superposé au cycle de calibrage ou aux cycles de calibrage ,avec priorité de traitement la plus élevée.

7. Procédé conforme à l'une des revendications 1, 2 ou 3, caractérisé par le fait que la séquence de calibrage des trajectoires utiles des rayons de détection est définie à l'intérieur d'un cycle de calibrage, selon un organigramme fixe ou variable, d'un cycle de calibrage à l'autre.

8. Procédé conforme à la revendication 4 ou 5, caractérisé par le fait que la séquence de calibrage des trajectoires utiles des rayons de détection est formée à l'intérieur d'un cycle de calibrage superposé à partir des trajectoires utiles des rayons de détection qui ont été déclarées ininterrompues dans le cycle de détection.

9. Procédé conforme à la revendication 8, caractérisé par le fait que l'opération de calibrage tout comme l'opération de détection, est réalisée en permanence, qu'une opération de détection suit une opération de calibrage, etc.,et que,lorsqu'une trajectoire utile des rayons de détection qui doit encore être calibrée est déclarée interrompue, celle-ci est exclue provisoirement de la séquence de calibrage prévue et que c'est la dernière valeur de calibrage utile obtenue qui est utilisée à la place de cette trajectoire utile des rayons de détection jusqu'au prochain calibrage, l'étape suivante étant alors de préférence l'exécution d'une opération de détection lors de la trajectoire utile suivante des rayons de détection de la séquence de détection ou, éventuellement, lors de la trajectoire utile voisine des rayons de détection, puis la constatation d'une éventuelle interruption de cette trajectoire utile suivante des rayons de détection, auquel cas l'opération de calibrage sera également exclue de la séquence de calibrage et ce jusqu'à ce que des trajectoires utiles de contrôle des rayons de détection éventuellement prévues, lesquelles se trouvent en-dehors d'une zone de couverture possible provoquée par un objet, délivrent un signal de contrôle ou, tant que d'autres conditions de plausibilité du bon fonctionnement de l'ensemble de la barrière photoélectrique sont remplies de telle façon que lors de la prochaine trajectoire utile des rayons de détection déclarée non interrompue, la séquence de calibrage prévue soit reprise jusqu'à la prochaine trajectoire utile des rayons de détection qui sera déclarée interrompue, etc., la séquence de calibrage prévue lors de la trajectoire utile actuelle des rayons de détection étant alors poursuivie ou une séquence de calibrage étant formée ad hoc, laquelle est constituée selon certains critères de sécurité, en fonction des paramètres actuels du système.

10. Procédé conforme à l'une des revendications 4 à 9, caractérisé par le fait que toutes les trajectoires utiles des rayons de détection ne sont pas calibrées au cours de chacune des séquences de calibrage, toutes les trajectoires utiles des rayons de détection étant calibrées par plusieurs séquences de calibrage à l'intérieur d'un intervalle suffisant pour raison de sécurité.

11. Procédé conforme à l'une des revendications 4 à 10, caractérisé par le fait que les séquences de calibrage, selon leur position à l'intérieur ou à l'extérieur d'une fenêtre de détection, sont différentes en fonction de la sélection et du nombre de trajectoires utiles des rayons de détection.

12. Procédé conforme à l'une des revendications 4 à 11, caractérisé par le fait qu'après chaque étape de calibrage,un contrôle est effectué pour constater que le récepteur réagit toujours à la valeur utilisée avant le calibrage, auquel cas le calibrage est poursuivi et, dans le cas contraire, le calibrage est interrompu, la valeur applicable avant le défaut étant alors à nouveau utilisée un signal de sécurité étant alors délivré pour la prise en compte d'une position de sécurité de l'équipement surveillé.

13. Procédé conforme aux revendications 1 à 12, caractérisé par le fait que le cycle de calibrage détermine l'intensité de rayonnement et / ou la sensibilité de réception pour les trajectoires utiles des rayons de détection et la mémorise au minimum pendant un cycle de détection.

14. Procédé conforme à la revendication 13, caractérisé par le fait que,lors d'un cycle de calibrage du premier type, l'émetteur est réglé sur une puissance de calibrage constante et que le facteur d'amplification de l'amplificateur pour chaque trajectoire utile des rayons de détection, obtenu à partir facteur d'amplification correspondant à une valeur qui est inférieure à une valeur du seuil de commutation d'un élément de commutation, est relevé de façon continue ou discontinue,jusqu'à ce qu'il atteigne le facteur d'amplification qui correspond à la valeur du seuil de commutation,
que celui-ci est ensuite multiplié par un coefficient afin de former le facteur d'amplification de la détection, celui-ci devant alors être légèrement supérieur au facteur d'amplification de la valeur de seuil,et
que ce facteur d'amplification de la détection est mémorisé pour être utilisé pendant le cycle de détection.

15. Procédé conforme à la revendication 1, caractérisé par le fait que la fenêtre de détection est ouverte par l'équipement à surveiller ou par une séquence de commande dérivée.

16. Procédé conforme à la revendication 13, caractérisé par le fait que lors d'un cycle de calibrage du second type, le récepteur est réglé sur une valeur constante de sensibilité de calibrage et que l'intensité / la puissance [I] de l'émetteur, obtenue à partir d'une valeur qui n'est plus détectable par le récepteur affecté à la trajectoire utile considérée des rayons de détection, est augmentée de façon continue ou discontinue jusqu'à ce que le récepteur prenne en compte un signal à une valeur limite de l'intensité [Ig] et
qu'ensuite celle-ci est multipliée par un coefficient afin de former l'intensité de détection [Ia], celle-ci devant alors être légèrement supérieure à la valeur limite de l'intensité [Ig] et
que ce facteur d'amplification de la détection est mémorisé pour être utilisé pendant le cycle de détection.

17. Procédé conforme à la revendication 13, caractérisé par le fait que lors d'un cycle de calibrage du troisième type, d'un côté l'intensité [I] de l'émetteur, obtenue à partir d'une valeur qui n'est plus détectable par le récepteur affecté à la trajectoire utile considérée des rayons de détection, est augmentée de façon continue ou discontinue jusqu'à ce que le récepteur prenne en compte un signal à une valeur limite de l'intensité [Ig] et
qu'ensuite celle-ci est multipliée par un coefficient afin de former l'intensité de détection [Ia], celle-ci devant alors être légèrement supérieure à la valeur limite de l'intensité [Ig] et
que ce facteur d'amplification de la détection est mémorisé pour être utilisé pendant le cycle de détection et
que d'un autre côté, parallèlement / simultanément avec l'augmentation de l'intensité [I] de l'émetteur, le facteur d'amplification de l'amplificateur pour chaque trajectoire utile des rayons de détection, obtenu à partir d'un facteur d'amplification correspondant à une valeur qui est inférieure à une valeur du seuil de commutation d'un élément de commutation, est relevé de façon continue ou discontinue jusqu'à ce qu'il atteigne le facteur d'amplification qui correspond à la valeur du seuil de commutation,
que celui-ci est ensuite multiplié par un coefficient afin de former le facteur d'amplification de la détection, celui-ci devant alors être légèrement supérieur au facteur d'amplification de la valeur de seuil et
que ce facteur d'amplification de la détection est mémorisé pour être utilisé pendant le cycle de détection.

18. Procédé conforme à la revendication 13, caractérisé par le fait que lors d'un cycle de calibrage du quatrième type, le facteur d'amplification du récepteur est augmenté de façon continue ou discontinue, alternativement avec la puissance d'émission de l'émetteur, jusqu'à obtenir d'un côté une valeur de seuil du facteur d'amplification et de l'autre côté une valeur limite de la puissance de l'émetteur, obtenue d'un côté à partir d'un facteur d'amplification qui correspond à une valeur qui est inférieure à une valeur du seuil de commutation d'un élément de commutation, et obtenue de l'autre côté à partir d'une valeur de la puissance d'émission qui n'est plus détectable par le récepteur affecté à la trajectoire utile considérée des rayons de détection,
qu'ensuite la valeur de seuil du facteur d'amplification, tout comme la valeur limite de la puissance d'émission, sont multipliées par un coefficient afin de former le facteur d'amplification de la détection ou la puissance d'émission de la détection [Ia], ceux-ci devant alors tous deux être légèrement supérieurs à la valeur de seuil du facteur d'amplification ou à la valeur limite de la puissance d'émission et
que le facteur d'amplification de la détection et la puissance d'émission de la détection sont tous deux mémorisés pour être utilisés pendant le cycle de détection.

19. Procédé conforme à la revendication 13, caractérisé par le fait que lors d'un cycle de calibrage du cinquième type, le facteur d'amplification du récepteur, alternativement avec la puissance d'émission de l'émetteur, est augmenté de façon continue ou discontinue d'une valeur définie pour le signal du récepteur, laquelle est inférieure à un seuil de commutation du commutateur à valeur de seuil branché en série avec l'amplificateur jusqu'à ce que celui-ci ait une valeur supérieure au seuil de commutation du signal de réception limite, et
qu'ensuite, aussi bien la valeur de seuil correspondante du facteur d'amplification, que la valeur limite correspondante de la puissance d'émission, sont multipliées par un coefficient, afin de former le facteur d'amplification de la détection ou la puissance d'émission de la détection [Ia], ceux-ci devant alors tous deux être légèrement supérieurs à la valeur de seuil du facteur d'amplification ou à la valeur limite de la puissance d'émission et
que le facteur d'amplification de la détection et la puissance d'émission de la détection sont tous deux mémorisés pour être utilisés pendant le cycle de détection.

20. Procédé conforme aux revendications 1 à 13, caractérisé par le fait que l'association par paire d'unémetteur et d'un récepteur représente temporairement une trajectoire utile des rayons de détection de telle façon qu'à chaque émetteur sont affectés plusieurs récepteurs dans au minimum une série de récepteurs et que ces affectations sont effectuées pour tous les émetteurs dans au minimum une série d'émetteurs.

21. Procédé conforme à la revendication 20, caractérisé par le fait que l'association par paire d'un émetteur et d'un récepteur représente temporairement une trajectoire utile des rayons de détection de telle façon, aussi bien dans une série de récepteurs que dans une série d'émetteurs, qu'il soit vérifié pour chaque trajectoire utile des rayons de détection si cette trajectoire utile des rayons de détection est interrompue, auquel cas, après la constatation d'une trajectoire utile interrompue des rayons de détection dans le sens de la progression de la série des récepteurs ou des émetteurs, la trajectoire utile des rayons de détection respectivement et géométriquement voisine suivante forme une affectation jusqu'à ce qu'aucune trajectoire utile des rayons de détection ne soit plus constalée comme interrompue pour ensuite continuer avec l'affectation dans la série de récepteurs ou la série d'émetteurs originelle, auquel cas les trajectoires utiles des rayons de détection ayant été constatées interrompues ne sont pas calibrées.

22. Procédé conforme aux revendications 1 à 20, caractérisé par le fait que l'association par paire d'un émetteur et d'un récepteur représente temporairement une trajectoire utile des rayons de détection de telle façon
que dans une passe de réglage chaque émetteur est réglé sur une valeur de puissance de consigne constante et chaque récepteur est réglé sur un facteur d'amplification de consigne constant,
qu'ensuite, lors de chaque trajectoire des rayons de détection, c'est-à-dire de l'association par paire d'un émetteur et d'un récepteur, un cycle d'optimisation est effectué pour déterminer la position de l'intensité maximale à l'intérieur de la trajectoire des rayons de détection et
que cette position de l'intensité maximale est utilisée pour l'affectation de chaque émetteur à un récepteur pour obtenir une trajectoire utile efficace optimale des rayons de détection.

23. Procédé conforme à l'une des revendications 1 à 22, caractérisé par le fait que des réflexions se produisant sur les surfaces voisines du rayon de détection sont évitées ou supprimées afin qu'elles ne puissent pas influencer le résultat de la détection ou la puissance d'émission arrivant sur le récepteur.

24. Procédé conforme à la revendication 23, caractérisé par le fait que la lumière émise par chaque émetteur est polarisée de façon circulaire et qu'un rayon parasite réfléchi arrivant éventuellement sur le récepteur est filtré.

25. Procédé conforme à la revendication 24, caractérisé par le fait que la lumière émise par chaque émetteur est focalisée par des obturateurs ou des lentilles.

26. Procédé conforme à la revendication 24, caractérisé par le fait que la lumière d'émission utilisée est une lumière focalisée.

27. Barrière photoélectrique destinée à délivrer un signal de commande avec un certain nombre d'émetteurs et de récepteurs agissant conjointement, les émetteurs et les récepteurs étant activés en cycles de détection par un circuit d'analyse, destinée à la réalisation du procédé conformément à la revendication 1, caractérisée par le fait que
le circuit d'analyse est conçu sous la forme d'un circuit d'analyse [1] calibrable, destiné à la commande automatique des grandeurs de référence utiles des différents rayons de détection utiles [S], c'est-à-dire des couples émetteur - récepteur, et de la séquence d'activation des rayons de détection utiles [S] de la barrière photoélectrique, et contient un circuit de commande [2] qui est raccordé à une mémoire de lecture, à une mémoire de travail [2.1 ou 2.2] et à une horloge [1.3] ainsi qu'à l'objet à commander par une sortie de commande [As] pour un signal de commande de sortie et une entrée [E3] pour un signal de commande d'entrée,et qui dispose de moyens d'affectation, lesquels affectent chaque émetteur [3.1.1, 3.1.2, etc.] d'un circuit d'émission [3] et chaque récepteur [4.1.1, 4.1.2, etc.] d'un circuit de réception [4] temporairement, pendant chaque phase d'utilisation.

28. Barrière photoélectrique conforme à la revendication 27, caractérisée par le fait que le circuit d'analyse calibrable dispose au minimum d'un circuit de calibrage du premier type [5-1] pour la commande automatique de l'intensité de chaque rayon de détection [S].

29. Barrière photoélectrique conforme à la revendication 27, caractérisée par le fait que le circuit d'analyse calibrable dispose au minimum d'un circuit de calibrage du second type [5-2] pour la commande automatique de la sensibilité du récepteur [4.1.i].

30. Barrière photoélectrique conforme à l'une des revendications 27 à 29, caractérisée par le fait que les zones de rayonnement de chacun des émetteurs [3.1.i] se chevauchent.

31. Barrière photoélectrique conforme à l'une des revendications 27 à 29, caractérisée par le fait que les zones de rayonnement de chacun des émetteurs [3.1.i] ne se chevauchent pas.

32. Barrière photoélectrique conforme à l'une des revendications 27 à 29, caractérisée par le fait que les émetteurs [3.1.i] prévus sont des émetteurs à rayon laser.

33. Barrière photoélectrique conforme à l'une des revendications 27 à 29, caractérisée par le fait que les émetteurs [3.1.i] prévus sont des émetteurs à rayon laser pulsés.

34. Barrière photoélectrique conforme à l'une des revendications 27 à 33, caractérisée par le fait que dans chaque trajectoire de rayonnement est prévue une paire de filtres à polarisation circulaire tournant simultanément, le polariseur étant disposé dans la zone de l'émetteur et l'analyseur étant disposé dans la zone du récepteur.

35. Barrière photoélectrique conforme à la revendication 28, caractérisée par le fait que le circuit de calibrage du premier type [5-1] destiné à la commande automatique de l'intensité de chaque rayon de détection dispose, pour chaque récepteur [4.1.i], d'un commutateur à valeur de seuil [5-1.1.i] disposé à la sortie de l'amplificateur [4.2.i] du circuit de réception [4] affecté au récepteur [4.1.i] et d'un Flip-Flop [5-1.2.i] alimenté par celui-ci, lequel est relié à la fois à une porte OU [5-1.3] commune à tous les récepteurs [4.1.i] et à une porte ET [5-1.4] commune à tous les récepteurs [4.1.i], les sorties de ces deux portes [5-1.3, 5-1.4] étant chacune reliées à l'entrée [E1 ou E2] d'un circuit de commande du premier type [2-1] et que tous les Flip-Flop [5-1.2.i] sont raccordés par une entrée d'initialisation avec une sortie d'initialisation [AR] du circuit de commande [2-1].

36. Barrière photoélectrique conforme à la revendication 29, caractérisée par le fait qu'un circuit de calibrage du second type [5-2] est destiné à la mesure de l'intensité du signal du récepteur [4.1.i], chaque récepteur [4.1.i] étant relié à un multiplexeur [5-2.1] à la sortie de l'amplificateur [4.2.i] du circuit de réception [4] affecté au récepteur [4.1.i], lequel commute individuellement chacun des signaux des amplificateurs [4.2.i] vers un convertisseur A/N [5-2.2] dont la sortie est commune avec une entrée [E1] d'un circuit de commande du second type [2-2], lequel dispose d'une sortie de commande du multiplexeur [Am] qui est reliée au multiplexeur [5-2.1] pour commander celui-ci.

37. Barrière photoélectrique conforme à la revendication 29, caractérisée par le fait qu'un circuit de calibrage du troisième type [5-3] estdestiné à la commande automatique de la sensibilité du récepteur [4.1.i], chaque récepteur [4.1.i] étant relié à un multiplexeur [5-3.1] à la sortie de l'amplificateur [4.2.i] du circuit de réception [4] affecté au récepteur [4.1.i], lequel commute individuellement chacun des signaux des amplificateurs [4.2.i] vers un amplificateur de calibrage [5-3.2] dont la sortie est commune avec une entrée [E1] d'un circuit de commande du troisième type [2-3], lequel dispose d'une sortie de commande de l'amplificateur [Av] reliée à un convertisseur N/A de commande de l'amplificateur [5-3.3], qui est relié à l'amplificateur de calibrage [5-3.2] pour commander celui-ci.

38. Barrière photoélectrique conforme aux revendications 27 à 37, caractérisée par le fait que le circuit d'émission du premier type [3-1] dispose d'un certain nombre d'émetteurs [3.1.i] dont les entrées sont raccordées à une source de courant [3-1.1] commune régulée dont l'entrée est reliée à un convertisseur A/N [3-1.2] dont l'entrée est raccordée à une sortie [Au] du circuit de commande [1er ou 2ème type], et que les émetteurs [3.1.i] sont reliés à chacune des sorties [A0 ou A1 ou ... An] du circuit de commande [2] qui leurs sont attribuées.

39. Barrière photoélectrique conforme aux revendications 27 à 37, caractérisée par le fait que le circuit d'émission du second type [3-2] dispose d'un certain nombre d'émetteurs [3.1.i] dont les entrées sont raccordées à une source de courant [3-2.1] commune régulée,dont l'entrée est reliée à une sortie [Au] du circuit de commande [1er ou 2ème type], et que les émetteurs [3.1.i] sont reliés à chacune des sorties [A0 ou Al ou ... An] du circuit de commande [2] qui leurs sont attribuées.

40. Barrière photoélectrique conforme aux revendications 27 à 37, caractérisée par le fait que le circuit d'émission du troisième type [3-3] dispose d'un certain nombre d'émetteurs [3.1.i] dont les entrées sont raccordées à un amplificateur [3-3.2] commun dont l'entrée est reliée à un convertisseur A/N [3-3.3] dont l'entrée est raccordée à une sortie [Au] du circuit de commande [1er ou 2ème type], qu'une résistance série [R] est montée avant l'entrée de chacun des récepteurs [3.1.i] et que les émetteurs sont reliés à chacune des sorties [A0 ou A1 ou ... An] du circuit de commande [2] qui leurs sont attribuées.

41. Barrière photoélectrique conforme aux revendications 27 à 40, caractérisée par le fait que le circuit de réception [4] est composé d'un certain nombre d'éléments récepteurs [4.1.i] montés en parallèle et de résistances séries [Re] montées en série avec chacun d'eux, chaque élément récepteur [4.1.i] étant ensuite raccordé à un amplificateur [4.2.i] qui, de son côté, est relié avec un commutateur à valeur de seuil ou un multiplexeur [5-1.1.i ou 5-2.1 ou 5-3.1] correspondant d'un circuit de calibrage [5].

42. Barrière photoélectrique conforme à l'une des revendications 27 à 41, caractérisée par le fait que le récepteur [4] est disposé du même côté que l'émetteur [3] et qu'un réflecteur qui lui est affecté.

43. Barrière photoélectrique conforme à l'une des revendications 27 à 41, caractérisée par le fait que le récepteur [4] et l'émetteur [3] sont disposés sur des côtés opposés.
